# EUROPEAN PATENT APPLICATION

(11) **EP 4 804 687 A1**
(43) Date of publication of application: **09.09.2026**
(21) Application number: 23957344.7
(22) Date of filing: 03.11.2023
(51) Int. Cl.: H04W 72/23

(54) **METHOD FOR TRANSMITTING PHYSICAL DOWNLINK CONTROL CHANNEL, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN)
(74) Representative: RGTH
(86) International application number: PCT/CN2023/129707
(87) International publication number: WO 2025/091488

(57) **Abstract**

Provided are a method for transmitting a physical downlink control channel (PDCCH), a terminal device, and a network device. The method comprises: a terminal device detects a first PDCCH, wherein the first PDCCH is borne in a first resource unit of a first type, some or all of transmission resources occupied by a reference signal in the first resource unit of the first type can be used for transmitting other signals, and the other signals are signals other than the reference signal. In embodiments of the present application, the network device can send the first PDCCH to the terminal device, and the transmission resources used for bearing the reference signal in the first PDCCH can be used for bearing other signals. Compared with the situation where, in traditional PDCCHs, a reference signal and other signals occupy different transmission resources for transmission in an orthogonal transmission mode, the present invention solves the problem of an increase in the transmission delay of other information in a first PDCCH due to an increase in the number of reference signals borne in the first PDCCH.

## Description

### TECHNICAL FIELD

This application relates to the field of communications technology, and more specifically, to a method for transmitting a physical downlink control channel, a terminal device and a network device.

### BACKGROUND

In a legacy physical downlink control channel (physical downlink control channel, PDCCH), a reference signal and control information are transmitted in an orthogonal transmission manner, that is, a transmission resource occupied by other information (for example, the control information) is different from a transmission resource occupied by the reference signal. In some scenarios, a quantity of reference signals transmitted by using the PDCCH may increase, resulting in an increase in a quantity of transmission resources occupied by the reference signal in the PDCCH. Correspondingly, a quantity of transmission resources for transmitting control information in the PDCCH decreases, which may increase a transmission delay of the control information, resulting in that the control information cannot be transmitted in a timely manner.

### SUMMARY

This application provides a method for transmitting a physical downlink control channel, a terminal device and a network device. Various aspects of this application are described below.

According to a first aspect, a method for transmitting a physical downlink control channel is provided, and the method includes: detecting, by a terminal device, a first physical downlink control channel PDCCH, where the first PDCCH is carried on a first resource element of a first type, in the first resource element of the first type, part or all of transmission resources occupied by a reference signal are available for transmitting another signal, and the another signal is a signal other than the reference signal.

According to a second aspect, a terminal device is provided, and the terminal device includes: a processing unit, configured to detect a first physical downlink control channel PDCCH, where the first PDCCH is carried on a first resource element of a first type, in the first resource element of the first type, part or all of transmission resources occupied by a reference signal are available for transmitting another signal, and the another signal is a signal other than the reference signal.

According to a third aspect, a terminal device is provided, and the terminal device includes: a processing unit, configured to detect a first physical downlink control channel PDCCH, where the first PDCCH is carried on a first resource element of a first type, in the first resource element of the first type, part or all of transmission resources occupied by a reference signal are available for transmitting another signal, and the another signal is a signal other than the reference signal.

According to a fourth aspect, a network device is provided, and the network device includes: a transmitting unit, configured to transmit a first physical downlink control channel PDCCH to a terminal device, where the first PDCCH is carried on a first resource element of a first type, in the first resource element of the first type, part or all of transmission resources occupied by a reference signal are available for transmitting another signal, and the another signal is a signal other than the reference signal.

According to a fifth aspect, a terminal device is provided, and the terminal device includes a processor, a memory, and a communications interface. The memory is configured to store one or more computer programs, and the processor is configured to invoke the computer program in the memory to cause the terminal device to execute some or all of the steps in the method according to the first aspect.

According to a sixth aspect, a network device is provided, and the network device includes a processor, a memory, and a transceiver. The memory is configured to store one or more computer programs, and the processor is configured to invoke the computer program in the memory to cause the network device to execute some or all of the steps in the method according to the second aspect.

According to a seventh aspect, an embodiment of this application provides a communications system, where the system includes the terminal device and/or the network device described above. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program, and the computer program causes a communications device (for example, a terminal device or a network device) to execute some or all of the steps in the method according to the foregoing aspects.

According to a ninth aspect, an embodiment of this application provides a computer program product. The computer program product includes a non-transitory computer-readable storage medium that stores a computer program. The computer program is operable to cause a communications device (for example, a terminal device or a network device) to execute some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

In embodiments of this application, the network device may transmit the first PDCCH to the terminal device, and the transmission resource that is used for carrying the reference signal in the first PDCCH may be used for carrying the another signal. Compared with a legacy PDCCH, in embodiments of this application, the reference signal and another signal occupy different transmission resources in an orthogonal transmission manner for transmission, this helps to solve a problem of an increase in the transmission delay of the other information in the first PDCCH due to an increase in a quantity of reference signals carried in the first PDCCH.

### BRIEF DESCRIPTION OF DRAWINGS

FIG. 1 is a schematic flowchart of transmitting signals in a wireless communications system to which embodiments of this application are applicable.
FIG. 2 is a schematic diagram of channel estimation and signal recovery to which embodiments of this application are applicable.
FIG. 3(a) to FIG. 3(c) are schematic diagrams of pilot patterns under different configurations.
FIG. 4 is a schematic flowchart of implementing nonlinear mapping by a neuron based on an activation function.
FIG. 5 is a schematic diagram of a neural network to which embodiments of this application are applicable.
FIG. 6 is a schematic structural diagram of a convolutional neural network.
FIG. 7 is a schematic diagram of a working principle of a long short-term memory model.
FIG. 8 is a schematic flowchart of performing channel estimation based on a channel estimation module.
FIG. 9 is a schematic diagram of a legacy PDCCH.
FIG. 10(a) to FIG. 10(c) are schematic diagrams of a CCE used to carry a PDCCH.
FIG. 11 is a schematic diagram of a CORESET carrying a PDCCH.
FIG. 12 shows a wireless communications system 1200 to which embodiments of this application are applicable.
FIG. 13 is a schematic diagram of a non-orthogonal transmission manner to which embodiments of this application are applicable.
FIG. 14 is a schematic flowchart of a method for transmitting a physical downlink control channel according to an embodiment of this application.
FIG. 15 is a schematic diagram of a first-type REG according to an embodiment of this application.
FIG. 16 is a schematic diagram of a first-type REG according to another embodiment of this application.
FIG. 17(a) and FIG. 17(b) are schematic diagrams of first-type REGs according to another embodiment of this application.
FIG. 18(a) to FIG. 18(h) are schematic diagrams of several common second resource elements of a first type in an embodiment of this application.
FIG. 19(a) to FIG. 19(h) are schematic diagrams of several common CCEs in an embodiment of this application.
FIG. 20(a) to FIG. 20(f) are schematic diagrams of several common CCEs in another embodiment of this application.
FIG. 21(a) to FIG. 21(c) show several common first-type REGs in an embodiment of this application.
FIG. 22 is a schematic diagram of a terminal device according to an embodiment of this application.
FIG. 23 is a schematic diagram of a network device according to an embodiment of this application.
FIG. 24 is a schematic diagram of a structure of a communications apparatus according to an embodiment of this application.

### DESCRIPTION OF EMBODIMENTS

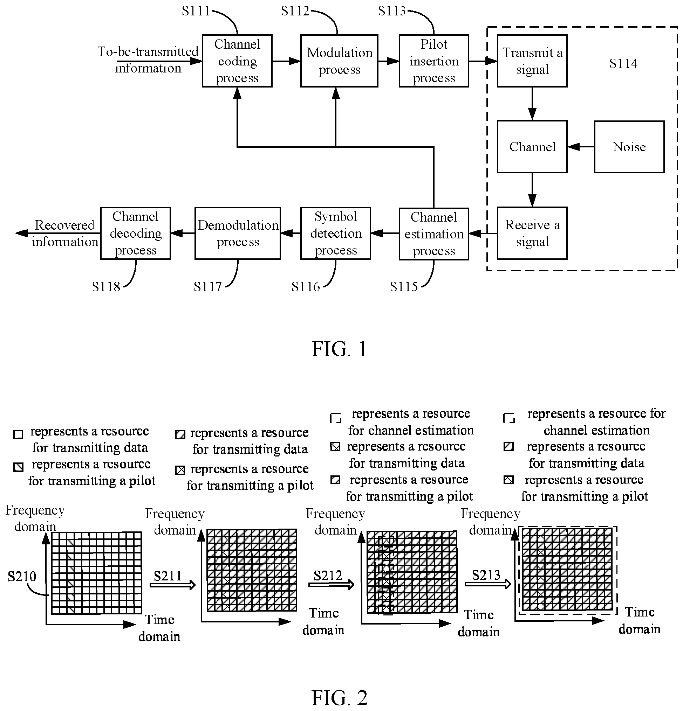

Technical solutions in this application are described below with reference to the accompanying drawings. For ease of understanding this application, the terms and communication processes involved in embodiments of this application are first introduced below with reference to FIG. 1 to FIG. 8.

### I. Signal Transmission Process in a Wireless Communications System

FIG. 1 is a flowchart of transmitting signals in a wireless communications system to which embodiments of this application are applicable. As shown in FIG. 1, a signal transmission process in a wireless communication system may be roughly divided into a plurality of signal processing processes S111 to S118 as shown in FIG. 1. Part or all of the signal processing processes shown in FIG. 1 may be implemented by using a separate AI model.

A transmitter performs channel coding on to-be-transmitted information in a channel coding process S111, to obtain an encoded bitstream. The to-be-transmitted information may be in a form of a bit stream.

The bitstream is modulated into a modulation symbol in the modulation process S112.

In the pilot insertion process S113, a pilot symbol is inserted into the modulation symbol to form a to-be-transmitted signal, where the pilot symbol may be used by a receiver to perform channel estimation and symbol detection.

In the signal transmission S114, the foregoing signal is carried on a channel and transmitted to the receiver. In a process of transmitting the signal through a channel, noise is usually superimposed.

In the channel estimation process S115, the receiver may perform channel estimation based on a reference signal to obtain channel state information (channel state information-reference signal, CSI), and feed back the CSI to the transmitter by using a feedback link for the transmitter to adjust channel encoding, modulation, precoding and other manners.

In the symbol detection process S116, symbol detection is performed on the received modulation symbol to obtain a detection result.

In the demodulation process S117, the received modulation symbol is demodulated based on the detection result to obtain a bitstream.

In the channel decoding process S118, the bitstream is decoded to obtain recovered information, where the recovered information may be in a form of a bit stream.

It should be understood that the signal processing processes S111 to S118 shown in FIG. 1 merely exemplarily list common signal processing processes in a wireless communications system, and the wireless communications system may further include signal processing processes such as resource mapping, precoding, interference cancellation, and CSI measurement. These signal processing processes may also be implemented by a separate artificial intelligence (artificial intelligence, AI) model. For brevity, details are not described in this application again.

### 2. Channel Estimation

Due to complexity and a time-varying characteristic of a wireless channel environment, in a wireless communications system (for example, the wireless communications system described above), a receiver is required to recover a received signal based on a channel estimation result.

FIG. 2 is a schematic diagram of channel estimation and signal recovery to which embodiments of this application are applicable.

As shown in FIG. 2, in step S210, in addition to transmitting a data signal on time-frequency resources, a transmitter also transmits a series of reference signals known to the receiver, such as a channel state information-reference signal (channel state information-reference signal, CSI-RS) and a demodulation reference signal (demodulation reference signal, DMRS).

In step S211, the transmitter transmits the data signal and the reference signals to the transmitter by using a channel.

A time-frequency resource occupied by the reference signal is different from the time-frequency resource occupied by the data signal.

In step S212, the receiver may perform channel estimation after receiving the reference signal. In a possible implementation, the receiver may estimate, based on a prestored reference signal and the received reference signal, channel information of a channel for transmitting the reference signal by using a channel estimation algorithm (for example, least squares (least squares method, LS) channel estimation).

In step S213, the receiver may recover, based on the channel information of the channel used for transmitting a pilot sequence, channel information on full time-frequency resources by using an interpolation algorithm, and the recovered channel information may be used for subsequent CSI feedback, data recovery, or the like.

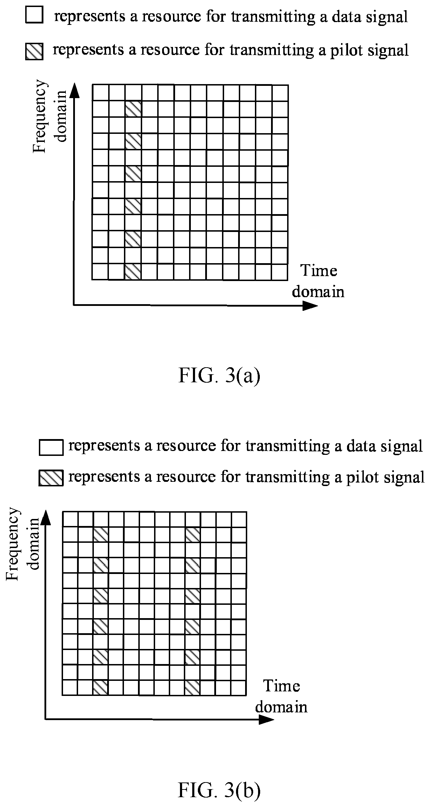

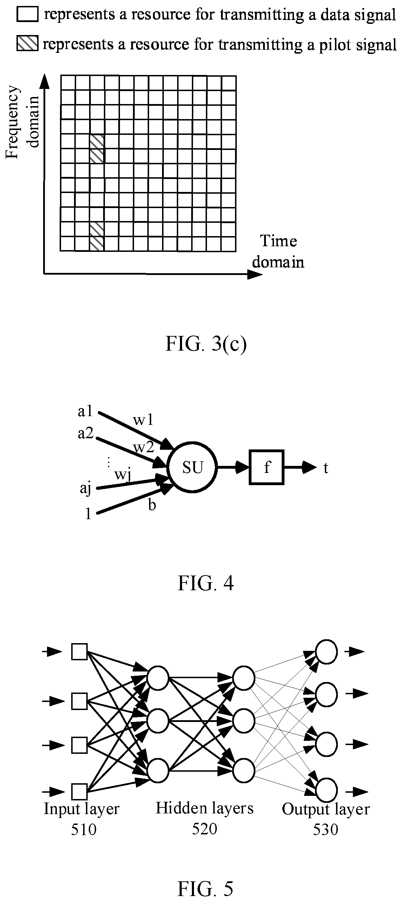

It may be learned from the foregoing description with reference to FIG. 2, that a time-frequency resource for transmitting the reference signal is different from a time-frequency resource for transmitting the data signal. In addition, in some communication protocols (for example, an NR communications protocol), it is specified that a symbol for transmitting a reference signal (hereinafter referred to as a "pilot symbol") is different from a symbol for transmitting a data signal (hereinafter referred to as a "data symbol"). FIG. 3 shows patterns of data symbols and pilot symbols in different configurations.

Referring to FIG. 3(a), in a resource block (resource block, RB), pilot symbols are distributed in a plurality of REs spaced by one subcarrier and corresponding to a symbol 2 in the RB. Referring to FIG. 3(b), in an RB, a pilot symbol occupies part of symbols in a plurality of symbols corresponding to a symbol 2 and a symbol 8 in the RB. Referring to FIG. 3(c), in an RB, a pilot symbol occupies a plurality of groups of REs in a symbol 2 in the RB, and each group of REs includes two transmission resource elements (resource element, RE) that are consecutive in frequency domain.

Generally, in the patterns shown in FIG. 3(a) to FIG. 3(c), different patterns may adapt to different communication environments. In some implementations, when a terminal device moves at a relatively high speed and channel characteristics change rapidly over time, a pattern with a relatively dense distribution of pilot symbols may be selected, which helps improve accuracy of channel quality estimation for the entire RB. For example, the pattern shown in FIG. 3(b) may be selected.

In some other implementations, when a terminal device moves at a relatively low speed and channel characteristics change slowly over time, a pattern with a relatively sparse distribution of pilot symbols may be selected, which helps reduce overheads caused by transmitting reference signals while ensuring the accuracy of channel quality estimation for the entire RB.

### III. Neural Network

In recent years, artificial intelligence research represented by a neural network has made great achievements in many fields, and will also play an important role in people's production and life for a long time to come. A neural network may be understood as an operation model including a plurality of neuron nodes that are connected, where a connection between nodes may represent a weighting value from an input signal to an output signal, which is generally referred to as a parameter. Each node performs weighted summation on different input signals and outputs the signals by using a specific activation function.

Referring to FIG. 4, a neuron may implement nonlinear mapping based on an activation function, where an input of the neuron may be denoted as A, each dimension of the input is denoted as aj, and a corresponding parameter is denoted as wj. The weight and a summation unit (summation units, SU) together enhance or weaken the input. In addition, an output of the SU may be input into an activation function f to obtain an output t, where a value of j is 1, 2, ..., n.

Common neural networks include a convolutional neural network (convolutional neural network, CNN), a recurrent neural network (recurrent neural network, RNN), a deep neural network (deep neural network, DNN), and the like.

With reference to FIG. 5, the following describes a neural network to which embodiments of this application are applicable. Layers of the neural network shown in FIG. 5 may be classified into three types according to locations of different layers: an input layer 510, a hidden layer 520, and an output layer 530. Generally, the first layer is the input layer 510, the last layer is the output layer 530, and the middle layers between the first layer and the last layer are the hidden layers 520.

The input layer 510 is configured to input data. The input data may be, for example, a received signal received by a receiver. The hidden layer 520 is configured to process the input data, for example, perform decompression processing on a received signal. The output layer 530 is configured to output processed output data, for example, output a decompressed signal.

As shown in FIG. 5, the neural network includes a plurality of layers, and each layer includes a plurality of neurons. Neurons between the layers may be fully connected, or may be partially connected. For connected neurons, an output of neurons of an upper layer may be used as an input of neurons of a lower layer.

With continuous development of neural network research, neural network deep learning algorithms are proposed in recent years. A relatively large quantity of hidden layers are introduced into a neural network to form a DNN. More hidden layers enable the DNN to better describe a complex situation in a real world. In theory, a model with a larger quantity of parameters has higher complexity and a larger "capacity", which means that the model can complete more complex learning tasks. This neural network model is widely used in pattern recognition, signal processing, optimization combination, anomaly detection, and the like.

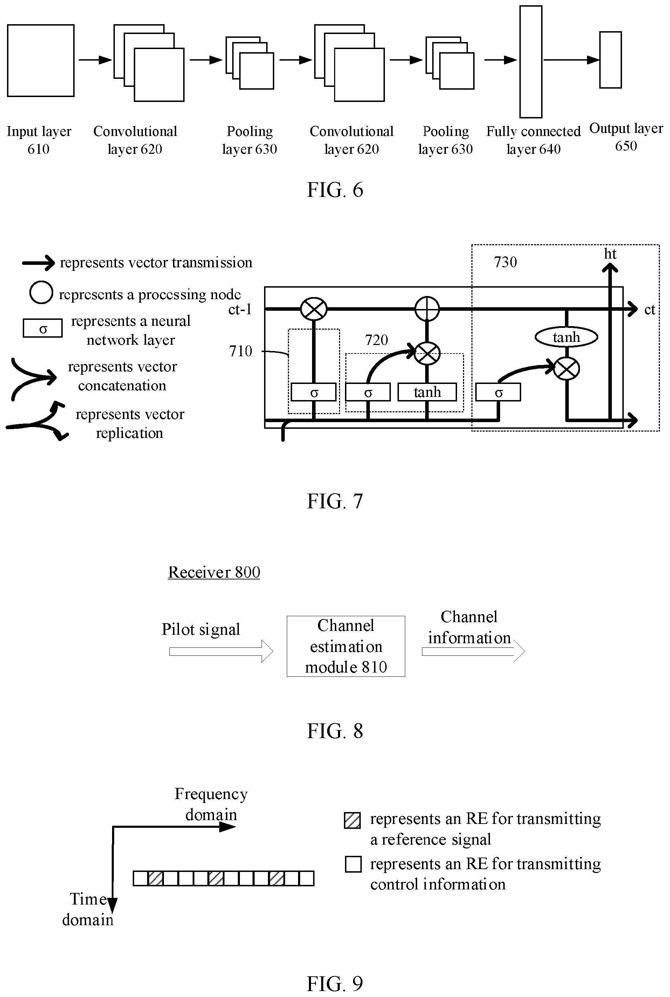

A CNN is a deep neural network with a convolutional structure. As shown in FIG. 6, the structure of the CNN may include an input layer 610, convolutional layers 620, pooling layers 630, a fully connected layer 640, and an output layer 650.

Each convolutional layer 620 may include a plurality of convolutional operators, and a convolutional operator is also referred to as a kernel. A function of the convolutional operator may be considered as a filter for extracting specific information from an input signal. The convolutional operator may essentially be a parameter matrix, and the parameter matrix is generally pre-defined.

Parameter values in these parameter matrices need to be obtained through a large amount of training in actual application. Each parameter matrix formed by using the parameter values obtained by training may extract information from an input signal, thereby helping the CNN perform correct prediction.

When the CNN has a plurality of convolutional layers, an initial convolutional layer usually extracts more general features, and the general features may also be referred to as lower-level features. As a depth of the CNN increases, features extracted from subsequent convolutional layers are increasingly complex.

Regarding the pooling layers 630, as a quantity of training parameters often needs to be reduced, a pooling layer often needs to be periodically introduced behind the convolutional layer. For example, as shown in FIG. 6, one pooling layer may follow one convolutional layer, or one or more pooling layers may follow a plurality of convolutional layers. In a signal processing process, the only purpose of the pooling layer is to reduce a size of space occupied by extracted information.

Regarding the fully connected layer 640, after the processing of the convolutional layers 620 and the pooling layers 630, it is still insufficient for the CNN to output required output information. As mentioned above, the convolutional layers 620 and the pooling layers 630 only extract features and reduce parameters brought by the input data. To generate the final output information (for example, a bitstream of original information transmitted by a transmit end), the CNN further needs to use the fully connected layer 640. Generally, the fully connected layer 640 may include a plurality of hidden layers. Parameters included in the plurality of hidden layers may be obtained by performing pre-training according to related training data of a specific task type. For example, the task type may include decoding a data signal received by a receiver, and for another example, the task type may alternatively include performing channel estimation based on a reference signal received by the receiver.

A layer behind the plurality of hidden layers in the fully connected layer 640, that is, the last layer of the entire CNN, is the output layer 650, which is configured to output a result. Generally, a loss function (for example, a loss function similar to a classification cross entropy) is set for the output layer 650, to calculate a prediction error, or in other words, to evaluate a degree of difference between the result (also referred to as a predicted value) output by the CNN model and an ideal result (also referred to as a true value).

To minimize the loss function, the CNN model needs to be trained. In some implementations, the CNN model may be trained using a backpropagation algorithm (backpropagation algorithm, BP). A training process of the BP includes a forward propagation process and a backward propagation process. In the process of forward propagation (as shown in FIG. 6, propagation from 610 to 650 is forward propagation), the input data is input into the foregoing layers of the CNN model, processed layer by layer, and transmitted to the output layer. If a difference between the result output at the output layer and the ideal result is relatively large, the training process is switched from forward propagation to backward propagation (as shown in FIG. 6, propagation from 650 to 610 is backward propagation) with an optimization objective of minimizing the foregoing loss function. A partial derivative of each neuron weight value with respect to the optimization objective is obtained layer by layer, to constitute a gradient of a weight value vector with respect to the optimization objective, which is used as a basis for modifying a model parameter. Then, the training process of the CNN is implemented during parameter modification. When the foregoing error reaches an expected value, the training process of the CNN ends.

It should be noted that the CNN shown in FIG. 6 is merely an example of a convolutional neural network. In a specific application, the convolutional neural network may also be in another form of network model, which is not limited in embodiments of this application.

RNNs are designed to process sequence data. In a conventional neural network model (for example, the CNN model), from an input layer to hidden layers and then to an output layer, different types of layers are fully connected, but layers of the same type are not connected. This ordinary neural network fails to solve many problems. For example, to predict a next word in a sentence, words before this word are generally used because words in a sentence are not independent of each other. A reason why RNNs are named recurrent neural networks is that a current output of a sequence is also related to a previous output, which is specifically characterized in that the network memorizes previous information and applies the information to calculation of the current output, that is, nodes between hidden layers are no longer connectionless but connected, and an input of a hidden layer includes not only an output of the input layer but also an output of the hidden layer at a previous instant. Theoretically, RNNs can process sequence data of any length.

Training for the RNN is similar to that for a conventional ANN (artificial neural network). A BP error backpropagation algorithm is also used, but there is a difference, which lies in that, if RNNs are unfolded, parameters W, U, and V are shared, but this is not the case in a conventional neural network. In addition, in a gradient descent algorithm, an output of each step depends on not only a network of a current step, but also a status of the network in previous several steps. For example, when t = 4, the training process is transferred backward by three steps, and various gradients need to be added to the backward three steps. This learning algorithm is referred to as backpropagation through time (back propagation through time, BPTT).

Since an artificial neural network and a convolutional neural network already exist, why is a recurrent neural network required? The reason is quite simple. For both the convolutional neural network and the artificial neural network, their prerequisite assumptions are as follows: elements are independent of each other, and an input and an output are also independent of each other, for example, a cat and a dog. However, in the real world, many elements are connected. For example, stocks change with time. One person says, "I like to travel. Yunnan is my favorite place, and I will go to __ if I have time." Everyone should know that "Yunnan" needs to be filled in the blank here, because this can be inferred from the context. However, it is difficult for a machine to do so. Consequently, a current recurrent neural network emerges. An essence of the recurrent neural network is having an ability to remember like a human being. Therefore, an output of the recurrent neural network depends on a current input and a memory. To explain the RNN in one sentence, it is a unit structure that is repeatedly used.

Currently, in order to solve problems of the RNN such as gradient explosion or vanishing, a transformation has been made on the basis of the RNN, to obtain a long short-term memory (long short-term memory, LSTM) model. Referring to FIG. 7, a new memory unit ct (which may also be referred to as a "cell state (cell state)") is introduced into LSTM, and is used to perform linear transfer of cyclic information and output information to an external state ht of a hidden layer. At each instant t, ct records historical information up to a current instant. Unlike the RNN, in which only the most recent state is considered, the memory unit determines which states should be maintained and which states should be forgotten, thereby solving a defect of a conventional RNN in long-term memory.

Still referring to FIG. 7, to implement the foregoing state selection, a gate control mechanism is introduced into the memory unit, to control a path of information transfer, which is similar to a gate in a data circuit, where "0" indicates disabled, and "1" indicates enabled. The memory unit includes a forget gate 710, an input gate 720, and an output gate 730. The forget gate is used to control how much information is required to be forgotten from the memory unit ct-1 at a previous instant, the input gate is used to control how much information in a candidate state (c_t) at a current instant is required to be stored, and the output gate is used to control how much information at the current instant is required to be output from the memory unit ct to the external state ht.

### IV. Channel Estimation Based on AI Decoder

Channel estimation based on an AI decoder aims to process a reference signal received by a receiver by using an AI-based channel estimation module to implement channel estimation.

FIG. 8 shows a process of channel estimation performed based on a channel estimation module. Referring to FIG. 8, a reference signal received by a receiver 800 is used as an input of a channel estimation module 810. Correspondingly, the channel estimation module 810 processes the input reference signal to output channel information. In addition, in some implementations, in addition to the reference signal, other assistance information may be added to improve accuracy of the channel information output by the channel estimation module. For example, an original sequence of the reference signal pre-stored by the receiver 800 may further be input to the channel estimation module 810, and the receiver 800 receives an energy level of the reference signal, a transmission delay or noise occurred during transmission of the reference signal, or the like.

### 5. Transmission Manner of Reference Signal in PDCCH

In some communications systems (for example, 5G NR), a resource element group (resource element group, REG) is introduced as a resource unit of a PDCCH. FIG. 9 is a schematic diagram of an REG carrying a PDCCH. Referring to FIG. 9, one REG occupies one time domain symbol (for example, an "orthogonal frequency division multiplexing (orthogonal frequency division multiplexing, OFDM) symbol") in time domain, occupies 12 subcarriers in frequency domain, that is, one REG may include 12 resource elements (resource element, RE).

Still referring to FIG. 9, a reference signal and a control information signal are transmitted in an orthogonal manner in the 12 REs. REs for transmitting the reference signal may include 3 REs, and REs for transmitting control information may include other REs, other than the REs for transmitting the reference signal, in the 12 REs. To be specific, the REs for transmitting the control information may include the remaining 9 REs in the 12 REs. In other words, the reference signal and the control information are transmitted in the 12 REs in an orthogonal transmission manner. Therefore, the 12 REs may be referred to as "orthogonal RS REs".

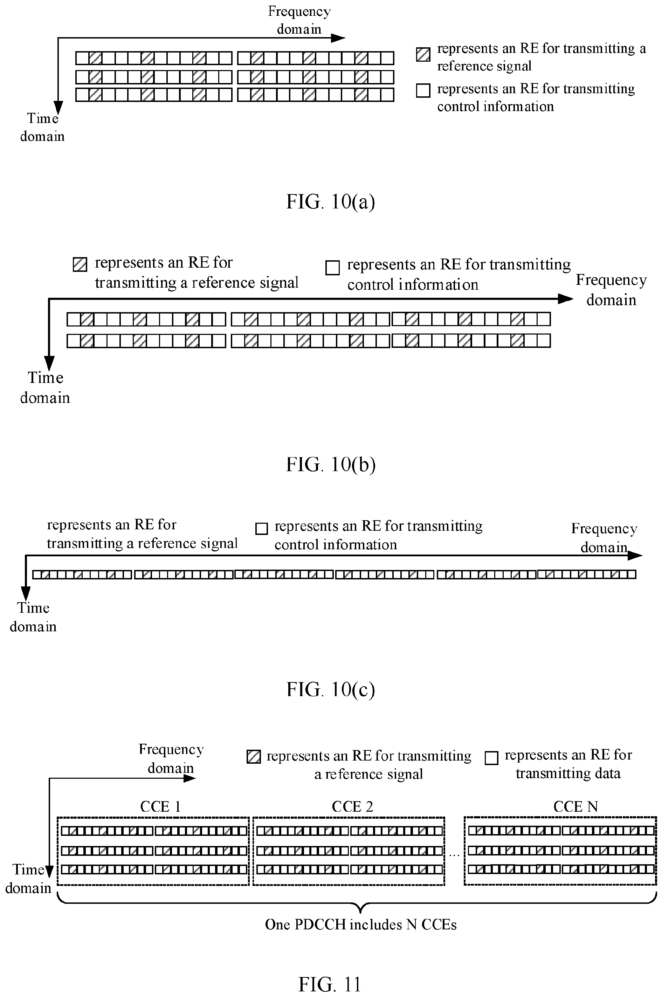

In some communications systems (for example, 5G NR), a control channel element (control channel element, CCE) is introduced as another resource unit of a PDCCH. Generally, one CCE may include 6 REGs. FIG. 10(a) to FIG. 10(c) show three kinds of CCEs for carrying a PDCCH.

Referring to FIG. 10(a), one CCE may include 6 REGs, the 6 REGs occupy three time domain symbols in time domain, and each REG in the 6 REGs occupies 12 subcarriers in frequency domain. Correspondingly, the 6 REGs are presented as three rows in time domain, and the 6 REGs are presented as two columns in frequency domain.

Referring to FIG. 10(b), one CCE may include 6 REGs, the 6 REGs occupy two time domain symbols in time domain, and each REG in the 6 REGs occupies 12 subcarriers in frequency domain. Correspondingly, the 6 REGs are presented as two rows in time domain, and the 6 REGs are presented as three columns in frequency domain.

Referring to FIG. 10(c), one CCE may include 6 REGs, the 6 REGs occupy one time domain symbol in time domain, and each REG in the 6 REGs occupies 12 subcarriers in frequency domain. Correspondingly, the 6 REGs are presented as one row in time domain, and the 6 REGs are presented as six columns in frequency domain.

In some communications systems (for example, 5G NR), a control resource set (control-resource set, CORESET) is introduced as another resource unit of a PDCCH. Usually, one NR PDCCH includes N (for example, N = 1, 2, 4, 8 or 16) identical CCEs, where N denotes an aggregation level (aggregation level). Generally, a larger N indicates a larger quantity of CCE repetitions and better PDCCH transmission performance, but more transmission resources are occupied for transmitting the PDCCH.

FIG. 11 is a schematic diagram of a CORESET carrying a PDCCH. Referring to FIG. 11(c), one CCE carrying a PDCCH may include 6 REGs, the 6 REGs occupy one time domain symbol in time domain, and each REG in the 6 REGs occupies 12 subcarriers in frequency domain. Correspondingly, the 6 REGs are presented as one row in time domain, and the 6 REGs are presented as six columns in frequency domain.

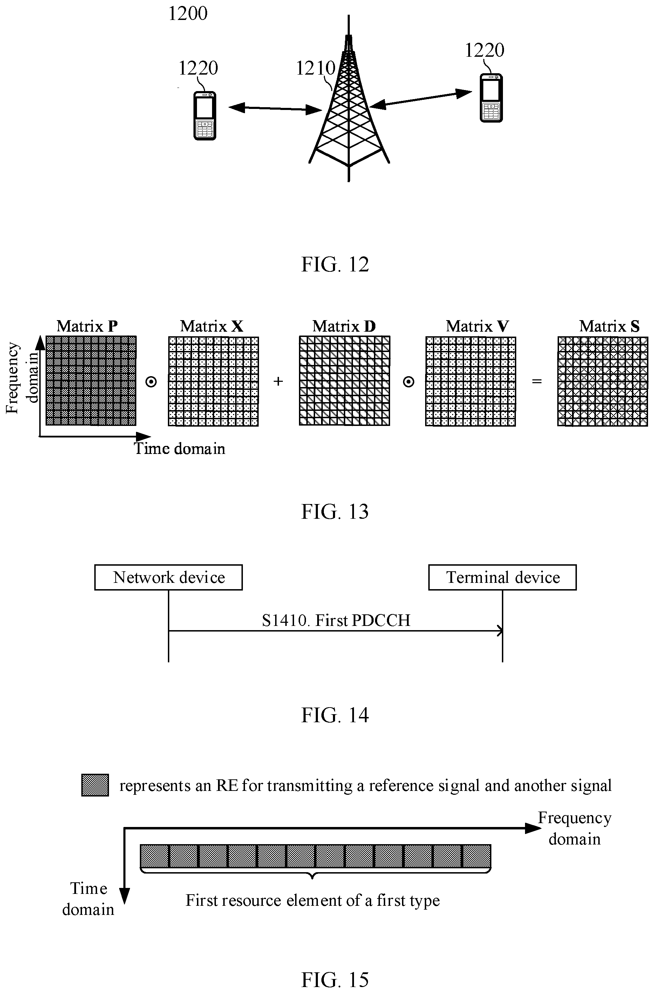

The foregoing describes a communication process and terms involved in embodiments of this application with reference to FIG. 1 to FIG. 11. The following describes a communications system to which embodiments of this application are applicable with reference to FIG. 12.

FIG. 12 shows a wireless communications system 1200 to which embodiments of this application are applicable. The wireless communications system 1200 may include a network device 1210. The network device 1210 may be a device that communicates with a terminal device 1220. The network device 1210 may provide communication coverage for a specific geographic area, and may communicate with a terminal device 1220 within the coverage.

FIG. 12 exemplarily shows one network device 1210 and two terminal devices 1220. Optionally, the wireless communications system 1200 may include a plurality of network devices, and another quantity of terminal devices may be included in coverage of each network device. This is not limited in embodiments of this application.

Optionally, the wireless communications system 1200 may further include another network entity such as a network controller or a mobility management entity, which is not limited in embodiments of this application.

Optionally, the terminal devices 1220 may also directly communicate with each other. For example, two terminal devices 1220 may communicate with each other by using a device-to-device (device-to-device, D2D) link.

It should be understood that the technical solutions in embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

It should be understood that the communications device involved in this application may be a network device, or may be a terminal device. For example, the first communications device is a network device, and the second communications device is a terminal device. For another example, the first communications device is a terminal device, and the second communications device is a network device. For another example, both the first communications device and the second communications device are network devices, or both are terminal devices.

It should be understood that all or some of functions of the communications device in this application may also be implemented by software functions running on hardware, or by virtualization functions instantiated on a platform (for example, a cloud platform).

Currently, in a known communications system, to improve reliability of signal transmission, signals are transmitted on different transmission resources. For example, signals transmitted on a plurality of transmission resources are transmitted in an orthogonal transmission manner. The orthogonal transmission may be understood as that signals transmitted on the plurality of transmission resources are processed as mutually orthogonal signals for transmission, and the orthogonal signals are transmitted independently of each other and do not interfere with each other. In an orthogonal transmission scenario, a transmission resource can be used for transmitting only one type of signal at a specific instant, resulting in low utilization of transmission resources. In addition, when total transmission resources are fixed, if a quantity of transmission resources occupied by a signal (hereinafter also referred to as "a first signal") increases, it means that a quantity of transmission resources available for transmitting another signal (hereinafter also referred to as "a second signal") decreases, which may cause that another signal fails to be transmitted in time.

For example, the first signal is a pilot signal, and the second signal is a data signal. The pilot signal and the data signal are orthogonally transmitted on different transmission resources. That is to say, a transmission resource can only be used for transmitting the data signal or the pilot signal at a specific instant, resulting in relatively low utilization of the transmission resource. In addition, when total transmission resources are fixed, if a quantity of transmission resources occupied by the pilot signal increases, it means that a quantity of transmission resources available for transmitting a data signal decreases, which may cause that the data signal fails to be transmitted in time. Alternatively, if a quantity of transmission resources occupied by the data signal increases, it means that a quantity of transmission resources available for transmitting the pilot signal decreases, which may cause that accuracy of channel estimation performed based on the pilot signal decreases.

Therefore, for the foregoing problem, an embodiment of this application provides a wireless communication method. In the method, a first signal and a second signal may be transmitted on a same transmission resource (also referred to as a "target transmission resource"), to improve utilization of the transmission resource.

In some implementations, the first signal and the second signal may be transmitted in a non-orthogonal manner on the target transmission resource. In other words, target signals transmitted on the target transmission resource include the first signal and the second signal that are transmitted in a non-orthogonal manner. In other words, non-orthogonal transmission is performed on the second signal and the first signal on the target transmission resource.

Based on the foregoing description, it can be learned that the first signal and the second signal may be simultaneously transmitted by using the target transmission resource. It may be understood that the first signal and the second signal are transmitted on the target transmission resource in a superimposed manner. Therefore, in embodiments of this application, the target transmission resource may also be referred to as "superimposed transmission resource".

In embodiments of this application, the first signal and the second signal may be different types of signals. For example, the second signal may include the data signal, and correspondingly, the first signal may include the pilot signal. The pilot signal is also referred to as a reference signal. For example, the reference signal may be a CSI-RS, a DMRS, a phase tracking reference signal (phase-tracking reference signal, PT-RS), a sounding reference signal (sounding reference signal, SRS), an SSB synchronization signal block (SS/PBCH block), a positioning reference signal (positioning reference signal, PRS), or the like. Certainly, in embodiments of this application, the first signal and the second signal may alternatively be other different types of signals. In some implementations, the second signal may include control information, and correspondingly, the first signal may include the pilot signal. In some other implementations, the second signal may include control information, and correspondingly, the first signal may include the pilot signal. In some other implementations, the first signal may include a first reference signal, and correspondingly, the second signal may include another reference signal different from the first reference signal. For example, the first signal may include a CSI-RS, and the second reference signal may include a DMRS.

For ease of understanding, the following describes a non-orthogonal transmission manner to which embodiments of this application are applicable with reference to FIG. 13. It should be noted that the non-orthogonal transmission manner to which embodiments of this application are applicable is not limited thereto. For example, superposition processing may be performed on the first signal and the second signal by using a model, so that subsequent transmission is performed in a non-orthogonal transmission manner. The model may be an AI model and/or a machine learning (machine learning, ML) model.

Referring to FIG. 13, it is assumed that a target transmission resource used for non-orthogonal transmission belongs to a transmission resource set, and a target signal transmitted on one or more target transmission resources in the transmission resource set is represented by using a matrix **S**. Correspondingly, the matrix **S** is determined by using a formula **S** = **V**⊙**D** + **X**⊙**P**, or the matrix **S** meets **V**⊙**D** + **X**⊙**P**. A matrix **V** represents a second parameter associated with a target transmission resource in the transmission resource set; a matrix **X** represents a first parameter associated with a target transmission resource in the transmission resource set; a matrix **D** represents a second signal transmitted on a target transmission resource in the transmission resource set; a matrix **P** represents a first signal transmitted on a target transmission resource in the transmission resource set; and ⊙ represents a Hadamard product.

In some implementations, assuming that an energy threshold corresponding to a target transmission resource is 1, the matrix **V** is determined based on a formula **V** = *sqrt*(**A**), the matrix **X** is determined based on a formula **X** = *sqrt*(1 - **A**), where the matrix **A** ∈ [0, 1], and *sqrt*() represents square root calculation.

In embodiments of this application, a quantity of target transmission resources included in the transmission resource set is not limited. Correspondingly, a dimension of the matrix mentioned above (for example, matrix **S**, matrix **V**, matrix **D**, matrix **P**, matrix **A**, matrix **V**, matrix **X**, or the like) is associated with a dimension (or quantity) of the target transmission resources in the transmission resource set. For example, each element in the matrix may correspond to one transmission resource in the transmission resource set. In some implementations, the dimension of the matrix is the same as a dimension of a target transmission resource in the transmission resource set. In an example in which the transmission resource set is an RB, the RB may include REs in N rows and M columns, and all REs in the RB are superimposed transmission resources. Correspondingly, the matrices mentioned above may be matrices with N rows and M columns, where M and N are positive integers.

Generally, when target transmission resources allocated by the system change, the dimension of the matrix also changes. For example, if the target transmission resources allocated by the system are two RBs, the dimension of the matrix is the same as a dimension of REs in the two RBs. Assuming that an RB may be represented as including REs in N rows and M columns, the two RBs include REs in 2N rows and 2M columns, and the dimension corresponding to the two RBs is 2N rows and 2M columns. In this case, if all REs in the two RBs are superimposed transmission resources, the dimension of the matrix mentioned above may be a matrix in 2N rows and 2M columns.

Generally, the terminal device may receive a non-orthogonally transmitted target signal based on a model, which helps improve receiving performance of the target signal. The model may be an AI model and/or a machine learning (machine learning, ML) model.

Based on the PDCCH described above with reference to FIG. 9 to FIG. 11, it may be learned that, in a legacy PDCCH, a reference signal and other information (for example, control information) are transmitted in an orthogonal transmission manner. That is, a transmission resource occupied by the control information is different from a transmission resource occupied by the reference signal. In some scenarios, a quantity of reference signals transmitted by using the PDCCH may increase, resulting in an increase in a quantity of transmission resources occupied by the reference signal in the PDCCH. Correspondingly, a quantity of transmission resources used for transmitting the other information in the PDCCH decreases, which may increase a delay for transmitting the other information, thus causing that the other information fails to be transmitted in time.

Therefore, in view of the foregoing problems, the applicant proposes that a new transmission manner for a reference signal may be introduced into a PDCCH, that is, the reference signal and other information are transmitted in a non-orthogonal transmission manner on the PDCCH, or in other words, a transmission resource occupied by the reference signal on the PDCCH may be further used for transmitting the other information, which helps reduce impact of the transmission resource occupied by the reference signal on a quantity of transmission resources used for transmitting the other information, so as to avoid increasing a transmission delay of the other information.

As described above, in resource elements (for example, a CCE and a REG) in a legacy PDCCH, both the reference signal and the control information are transmitted in an orthogonal transmission manner. Therefore, to support the non-orthogonal transmission manner, a new resource element (hereinafter also referred to as "a first resource element of a first type") is introduced in embodiments of this application. The following describes a method for transmitting a physical downlink control channel in an embodiment of this application with reference to FIG. 14. The method illustrated in FIG. 14 includes step S1410.

In step S1410, a network device transmits a first PDCCH to a terminal device, and correspondingly, the terminal device detects the first PDCCH.

In some implementations, the first PDCCH is carried on a first resource element of a first type, in the first resource element of the first type, part or all of transmission resources occupied by a reference signal are available for transmitting another signal, and the another signal is a signal other than the reference signal. For example, in a same cell, part or all of transmission resources occupied by the reference signal in the first resource element of the first type are used for transmitting the another signal.

The another signal is not limited in embodiments of this application. In some implementations, the another signal may be used to carry control information. The control information may include information used for scheduling and other control information. For example, the control information may include one or more of the following: information for indicating a transmission format, resource allocation information, an uplink scheduling grant, power control information, or uplink retransmission information. Certainly, in embodiments of this application, the another signal may be used to carry other information carried in a future PDCCH.

The transmission resource is not limited in embodiments of this application. In some implementations, the transmission resource may be an RE. Correspondingly, the first resource element may include a plurality of REs. In this case, the first resource element may be referred to as an RE set or an REG. For example, one REG may include 12 REs. In some other implementations, the transmission resource may be an REG. Correspondingly, the first resource element may include a plurality of REGs. In this case, the first resource element may be referred to as a CCE, or the first resource element may be referred to as a CORESET. For example, one CCE may include 6 REGs. Certainly, in embodiments of this application, the transmission resource may further include transmission resources of another granularity. For example, the transmission resource may include a resource block (resource block, RB).

For ease of understanding, an example in which the first resource element is an REG or a CCE is used in the following, and the description is given with reference to Embodiment 1 and Embodiment 2. It should be noted that the name of the first resource element is not limited in embodiments of this application.

### Embodiment 1: The first resource element is an REG.

In some implementations, in a first-type REG, all transmission resources occupied by a reference signal may be used for transmitting another signal.

In other words, the first resource element of the first type may include P1 transmission resources used for transmitting a first-type reference signal (0 < P1 < P), and the first resource element of the first type does not include a second-type reference signal, where P1 and P are positive integers. The first-type reference signal may be understood as a reference signal that is transmitted in a non-orthogonal manner, that is, the transmission resources for transmitting the first-type reference signal may be used for transmitting the another signal. Correspondingly, the second-type reference signal may be understood as a reference signal that is transmitted in an orthogonal manner, that is, a transmission resource for transmitting the second-type reference signal cannot be used for transmitting the another signal.

In embodiments of this application, in the first-type REG, all transmission resources occupied by the reference signal may be used for transmitting the another signal, which helps avoid impact of transmission of the reference signal on transmission of the another signal, and improves utilization of transmission resources.

In an example in which the transmission resource is an RE, all REs occupied by the reference signal in the first-type REG may be used for transmitting the another signal. FIG. 15 is a schematic diagram of a first-type REG according to an embodiment of this application. Referring to FIG. 15, the first-type REG includes 12 REs, and all the 12 REs may be used to simultaneously transmit a reference signal and another signal, or in other words, in the 12 REs, the reference signal and another signal may be transmitted in a non-orthogonal transmission manner. Therefore, the 12 REs may also be referred to as "non-orthogonal RS REs".

In some other implementations, in the first-type REG, part of transmission resources occupied by the reference signal may be used for transmitting the another signal, that is, in transmission resources occupied by the reference signal, part of transmission resources (also referred to as a first part of transmission resources) may be used for transmitting the another signal. Another part of transmission resources (also referred to as a second part of transmission resources) cannot be used for transmitting the another signal. The second part of transmission resources may be part or all of transmission resources, other than the first part of transmission resources, in the transmission resources occupied by the reference signal.

In other words, the first resource element of the first type includes a plurality of transmission resources, and the reference signal occupies the plurality of transmission resources. Part of transmission resources in the plurality of transmission resources may be used for transmitting the another signal, and the other part of transmission resources in the plurality of transmission resources cannot be used for transmitting the another signal. The other part of transmission resources are transmission resources, other than the part of transmission resources, in the plurality of transmission resources.

In other words, the first resource element of the first type may include P1 (0 < P1 < P) transmission resources used for transmitting a first-type reference signal and P2 (0 < P2 < P) transmission resources used for transmitting a second-type reference signal, where P1, P2, and P are positive integers. The first-type reference signal may be understood as a reference signal that is transmitted in a non-orthogonal manner, that is, the transmission resources for transmitting the first-type reference signal may be used for transmitting the another signal. Correspondingly, the second-type reference signal may be understood as a reference signal that is transmitted in an orthogonal manner, that is, the transmission resources for transmitting the second-type reference signal cannot be used for transmitting the another signal. For example, in a same cell, a transmission resource for transmitting the second-type reference signal cannot be used for transmitting the another signal. In embodiments of this application, a sum of P1 and P2 may be P, or a sum of P1 and P2 may be less than P.

In embodiments of this application, transmitting the first-type reference signal and the second-type reference signal in the first resource element of the first type helps reduce impact on transmission of the another signal on while increasing a quantity of transmission resources for transmitting the reference signal, and also improve utilization of transmission resources.

In addition, when the first-type reference signal is received by using a model, because the model has poor generalization performance, when a channel scenario suddenly changes, the model cannot perform accurate channel estimation based on a non-orthogonally transmitted reference signal. In this case, channel estimation may still be performed based on the second-type reference signal transmitted in the first resource element of the first type, which helps reduce a degree of decrease in accuracy of channel estimation due to the model failing to be applicable to the changed channel scenario.

Moreover, because the second-type reference signal is transmitted in the first resource element of the first type, channel estimation may be performed based on the second-type reference signal regardless of whether a terminal device supports receiving the first-type reference signal, which helps to be compatible with a scenario in which a terminal device failing to support receiving the first-type reference signal performs channel estimation.

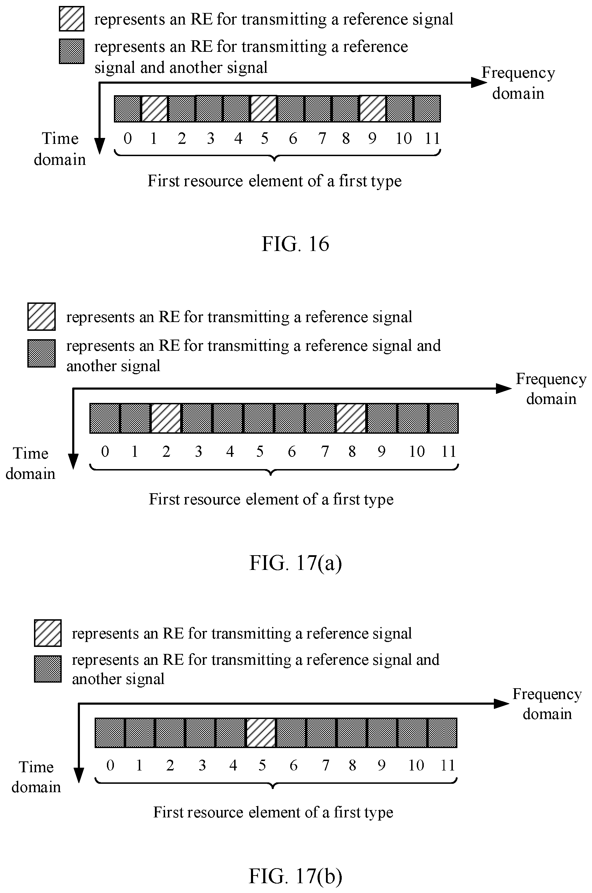

The following uses an example in which the transmission resource is an RE to describe a first-type REG in an embodiment of this application with reference to FIG. 16. Referring to FIG. 16, the first-type REG includes 12 REs, and indexes of the 12 REs increase from 0 in ascending order in frequency domain. In the 12 REs, an RE 1, an RE 5, and an RE 9 may be used for transmitting a reference signal (that is, the second-type reference signal), and remaining REs may be used for transmitting a reference signal (that is, the first-type reference signal) and another signal. That is to say, all three orthogonal RS REs are reserved in the first-type REG shown in FIG. 16, and all the remaining nine REs are set as non-orthogonal RS REs. Compared with the conventional reference signal transmission manner (for example, the reference signal transmission manner described in FIG. 9), in this reference signal transmission manner, a non-orthogonal transmitted reference signal is added to an original orthogonal transmitted reference signal, so that channel estimation performance can be significantly improved.

In addition, when the non-orthogonal transmitted reference signal is received by using a model, because the model has poor generalization performance, when a channel scenario suddenly changes, the model cannot perform accurate channel estimation based on the non-orthogonally transmitted reference signal. In this case, channel estimation may still be performed based on the three orthogonal RS REs reserved in the REG shown in FIG. 16, which helps reduce a degree of decrease in accuracy of channel estimation due to the model failing to be applicable to the changed channel scenario.

Moreover, the REG shown in FIG. 16 reserves three orthogonal RS REs. Therefore, regardless of whether the terminal device supports receiving the reference signal that is transmitted in a non-orthogonal transmission manner, channel estimation may be performed based on the reference signal transmitted in the REG. This helps to be compatible with a scenario in which a terminal device failing to support receiving the reference signal in a non-orthogonal transmission manner performs channel estimation.

The first-type REG in embodiments of this application is described above with reference to FIG. 15 and FIG. 16. For ease of understanding, the following describes several other common first-type REGs provided in embodiments of this application with reference to FIG. 17(a) and FIG. 17(b).

Referring to FIG. 17(a), a first-type REG includes 12 REs, and indexes of the 12 REs increase from 0 in ascending order in frequency domain. In the 12 REs, an RE 2 and an RE 8 may be used for transmitting a reference signal, and cannot be used for transmitting another signal. The remaining REs may be used for transmitting the reference signal and another signal. That is to say, two orthogonal RS REs are reserved in the first-type REG shown in FIG. 17(a), and all the remaining ten REs are set as non-orthogonal RS REs. Compared with the conventional reference signal transmission manner (for example, the reference signal transmission manner described in FIG. 9), in this reference signal transmission manner, although a quantity of orthogonal RS REs is reduced, since a quantity of non-orthogonal RS REs is introduced, which helps to improve performance of channel estimation.

In addition, when the non-orthogonal transmitted reference signal is received by using a model, because the model has poor generalization performance, when a channel scenario suddenly changes, the model cannot perform accurate channel estimation based on the non-orthogonally transmitted reference signal. In this case, channel estimation may still be performed based on the two orthogonal RS REs reserved in the REG shown in FIG. 17(a), which helps reduce a degree of decrease in accuracy of channel estimation due to the model failing to be applicable to the changed channel scenario.

Moreover, the REG shown in FIG. 17(a) reserves two orthogonal RS REs. Therefore, regardless of whether the terminal device supports receiving the reference signal that is transmitted in a non-orthogonal transmission manner, channel estimation may be performed based on the reference signal transmitted in the REG. This helps to be compatible with a scenario in which a terminal device failing to support receiving the reference signal in a non-orthogonal transmission manner performs channel estimation.

Referring to 17(b), a first-type REG includes 12 REs, and indexes of the 12 REs increase from 0 in ascending order in frequency domain. In the 12 REs, an RE 5 may be used for transmitting a reference signal, and the remaining REs may be used for transmitting a reference signal and another signal. That is to say, one orthogonal RS RE is reserved in the first-type REG shown in FIG. 17(b), and all the remaining 11 REs are set as non-orthogonal RS REs. Compared with the conventional reference signal transmission manner (for example, the reference signal transmission manner described in FIG. 9), in this reference signal transmission manner, although a quantity of orthogonal RS REs is reduced, since a quantity of non-orthogonal RS REs is introduced, a case of excessive decrease in performance of channel estimation may be avoided.

In addition, when the non-orthogonal transmitted reference signal is received by using a model, because the model has poor generalization performance, when a channel scenario suddenly changes, the model cannot perform accurate channel estimation based on the non-orthogonally transmitted reference signal. In this case, channel estimation may still be performed based on the one orthogonal RS REs reserved in the REG shown in FIG. 17(b), which helps reduce a degree of decrease in accuracy of channel estimation due to the model failing to be applicable to the changed channel scenario.

Moreover, the REG shown in FIG. 17(b) reserves one orthogonal RS REs. Therefore, regardless of whether the terminal device supports receiving the reference signal that is transmitted in a non-orthogonal transmission manner, channel estimation may be performed based on the reference signal transmitted in the REG. This helps to be compatible with a scenario in which a terminal device failing to support receiving the reference signal in a non-orthogonal transmission manner performs channel estimation.

The first-type REG in embodiments of this application is described above with reference to FIG. 17(a) and FIG. 17(b). In some implementations, a first PDCCH may be further carried on a second-type REG. In the second-type REG, a transmission resource occupied by a reference signal is not used for transmitting another signal, or in other words, in the second-type REG, the reference signal is transmitted orthogonally to the another signal.

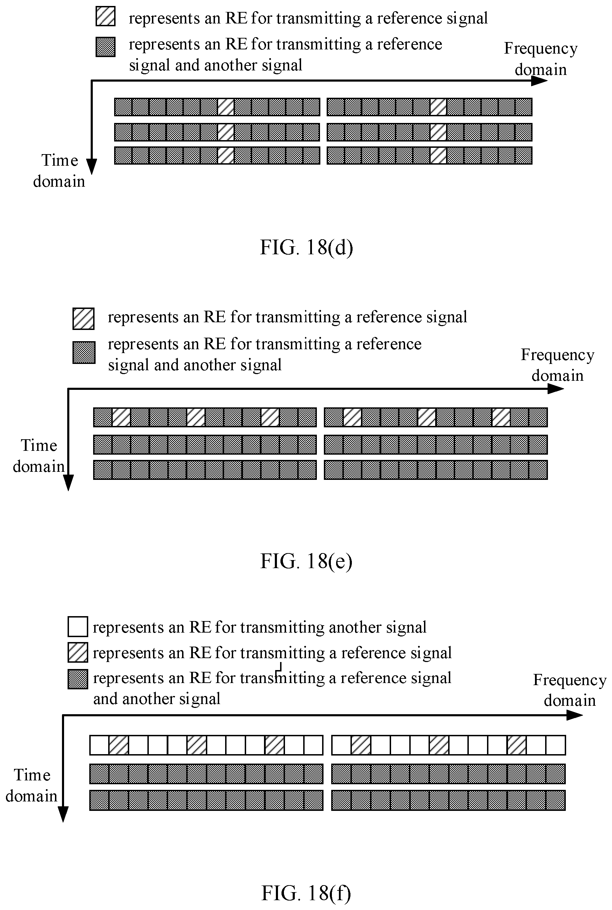

In some implementations, if the first PDCCH is carried on the first-type REG and the second-type REG, and a time domain location in which the second-type REG is located is not later than (that is, earlier than or equal to) a time domain location in which the first-type REG is located, which helps shorten a delay in obtaining a channel estimation result by a terminal device. For example, for a terminal device failing to support receiving a non-orthogonal transmission reference signal, the terminal device may perform channel estimation based on a reference signal transmitted in the second-type REG, to obtain a relatively accurate channel estimation result as soon as possible. The following description will be provided with reference to FIG. 18(f), FIG. 18(h), FIG. 19(f), FIG. 19(h), FIG. 20(e), and FIG. 20(f). For brevity, details are not described herein again.

In some implementations, a second resource element may be introduced to carry the first PDCCH. The second resource element of the first type may include one or more first resource elements of the first type, that is, the second resource element of the first type may include one or more first-type REGs.

For example, the second resource element of the first type may include M1 first resource elements of the first type, and the second resource element of the first type does not include a first resource element of the second type, where 1 ≤ M1 ≤ M, and M1 is a positive integer.

In some implementations, the second resource element used to carry the first PDCCH may further include a second resource element of a second type, and in the second resource element of the second type, a reference signal is transmitted in an orthogonal transmission manner, that is, in the second resource element of the second type, a transmission resource that is used for transmitting the reference signal cannot be used for transmitting another signal.

For example, the second resource element of the first type may include M1 first resource elements of the first type and M2 first resource elements of the second type, where 1 ≤ M1 ≤ M, 1 ≤ M2 ≤ M, and M1, M2, and M are positive integers. In embodiments of this application, a sum of M1 and M2 may be equal to M, or a sum of M1 and M2 may be less than M.

In some implementations, a quantity of second resource elements used to carry the first PDCCH may be referred to as an aggregation level (aggregation level) of the first PDCCH. For example, if the first PDCCH is carried on N second resource elements, N is an aggregation level, where N is a positive integer. In embodiments of this application, a value of N is not limited. For example, a value of N may be 1, 2, 4, 8 or 16.

In embodiments of this application, the second resource element of the first type is not limited. In some implementations, the second resource element of the first type may be referred to as a first-type CCE. In some other implementations, the second resource element of the first type may be referred to as a CORESET of the first type. Certainly, in embodiments of this application, the second resource element may also be named using another term.

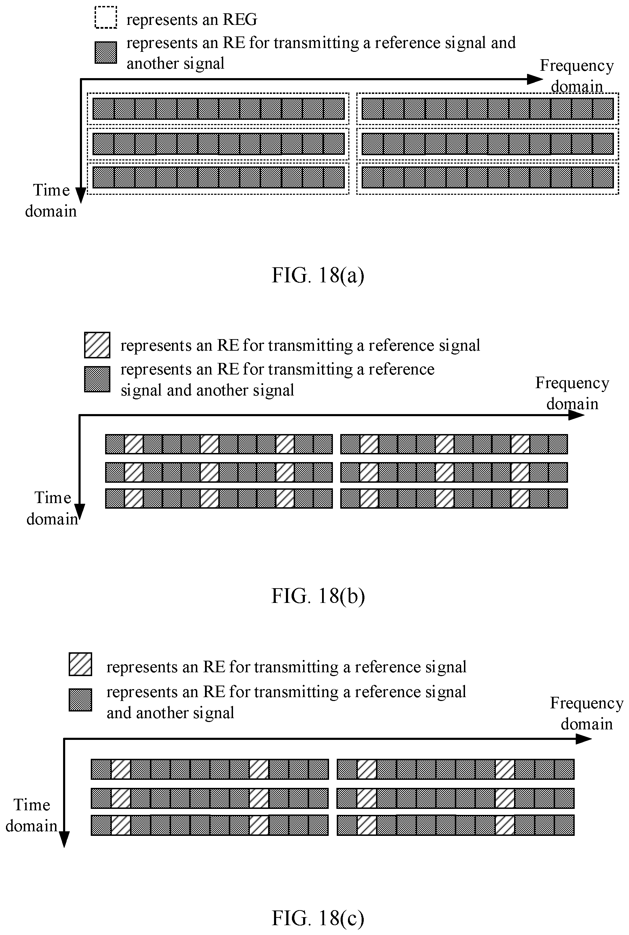

For ease of understanding, the following describes several common second resource elements of the first type in embodiments of this application with reference to FIG. 18(a) to FIG. 18(h) by using an example in which the second resource unit is a CCE.

Referring to FIG. 18(a), one CCE may include 6 REGs, and each REG in the 6 REGs adopts the REG shown in FIG. 15. Therefore, the CCE shown in FIG. 18(a) has the advantages described above with reference to FIG. 15. For brevity, details are not described herein again. In addition, since each REG in the 6 REGs adopts the REG shown in FIG. 15, the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 18(b), one CCE may include 6 REGs, and each REG in the 6 REGs adopts the REG shown in FIG. 16. Therefore, the CCE shown in FIG. 18(b) has the advantages described above with reference to FIG. 16. For brevity, details are not described herein again. In addition, since each REG in the 6 REGs adopts the REG shown in FIG. 16, the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 18(c), one CCE may include 6 REGs, and each REG in the 6 REGs adopts the REG shown in FIG. 17(a). Therefore, the CCE shown in FIG. 18(c) has the advantages described above with reference to FIG. 17(a). For brevity, details are not described herein again. In addition, since each REG in the 6 REGs adopts the REG shown in FIG. 17(a), the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 18(d), one CCE may include 6 REGs, where the 6 REGs respectively occupy three symbols in a sequence from early to late in time domain: a symbol 0 to a symbol 2, and each symbol includes two REGs. For the two REGs in the symbol 0, the REG shown in FIG. 17(b) may be adopted. For the REGs in the symbol 2 and the symbol 3, the REG shown in FIG. 15 may be adopted. In other words, for the REGs in the symbol 1 and the symbol 2, all included REs may be used for transmitting a reference signal and another signal.

In embodiments of this application, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1 and the symbol 2, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1 and the symbol 2, the terminal device may also perform communication based only on the rough channel estimation result.

Referring to FIG. 18(e), one CCE may include 6 REGs, where the 6 REGs respectively occupy three symbols in a sequence from early to late in time domain: a symbol 0 to a symbol 2, and each symbol includes two REGs. For the two REGs in the symbol 0, the REG shown in FIG. 16 may be adopted. For the REGs in the symbol 1 and the symbol 2, the REG shown in FIG. 15 may be adopted. In other words, for the REGs in the symbol 1 and the symbol 2, all included REs may be used for transmitting the reference signal and another signal.

In embodiments of this application, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1 and the symbol 2, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1 and the symbol 2, the terminal device may also perform communication based only on the rough channel estimation result. Moreover, because REGs in the symbol 0 include three orthogonal RS REs, channel estimation may be performed based on the CCE regardless of whether the terminal device supports receiving an RS RE that is transmitted in a non-orthogonal transmission manner. This helps extend a scenario to which the CCE is applicable, so as to be compatible with a terminal device failing to support receiving an RS RE that is transmitted in a non-orthogonal transmission manner. The terminal device failing to support receiving an RS RE that is transmitted in a non-orthogonal transmission manner may perform channel estimation based on the REGs in the symbol 0 in the CCE. The terminal device that supports receiving an RS RE that is transmitted in a non-orthogonal transmission manner may perform channel estimation based on REGs in all symbols in the CCE.

Referring to FIG. 18(f), one CCE may include 6 REGs, where the 6 REGs respectively occupy three symbols in a sequence from early to late in time domain: a symbol 0 to a symbol 2, and each symbol includes two REGs. In addition, in each RE, the index of the RE starts from 0 and is numbered in ascending order of frequency. For the two REGs in the symbol 0, the REG shown in FIG. 9 may be adopted. That is to say, in the two REGs in the symbol 0, only an RE 1, an RE 5, and an RE 9 may be used for transmitting a reference signal and cannot be used for transmitting another signal. Other REs may be used for transmitting the reference signal and another signal. For the REGs in the symbol 1 and the symbol 2, the REG shown in FIG. 15 may be adopted. In other words, for the REGs in the symbol 1 and the symbol 2, all included REs may be used for transmitting the reference signal and another signal.

In embodiments of this application, the CCE includes two types of REGs. A first-type REG includes only an orthogonal RS RE, and a second-type REG includes only a non-orthogonal RS RE. Therefore, the CCE may also be referred to as a "CCE hybrid structure". Such a CCE has the advantages described above with respect to the two types of REG. In addition, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1 and the symbol 2, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1 and the symbol 2, the terminal device may also perform communication based only on the rough channel estimation result. Moreover, because REGs in the symbol 0 include three orthogonal RS REs, channel estimation may be performed based on the CCE regardless of whether the terminal device supports receiving an RS RE that is transmitted in a non-orthogonal transmission manner. This helps extend a scenario to which the CCE is applicable, so as to be compatible with a terminal device failing to support receiving an RS RE that is transmitted in a non-orthogonal transmission manner. The terminal device failing to support receiving an RS RE that is transmitted in a non-orthogonal transmission manner may perform channel estimation based on the REGs in the symbol 0 in the CCE. The terminal device that supports receiving an RS RE that is transmitted in a non-orthogonal transmission manner may perform channel estimation based on REGs in all symbols in the CCE.

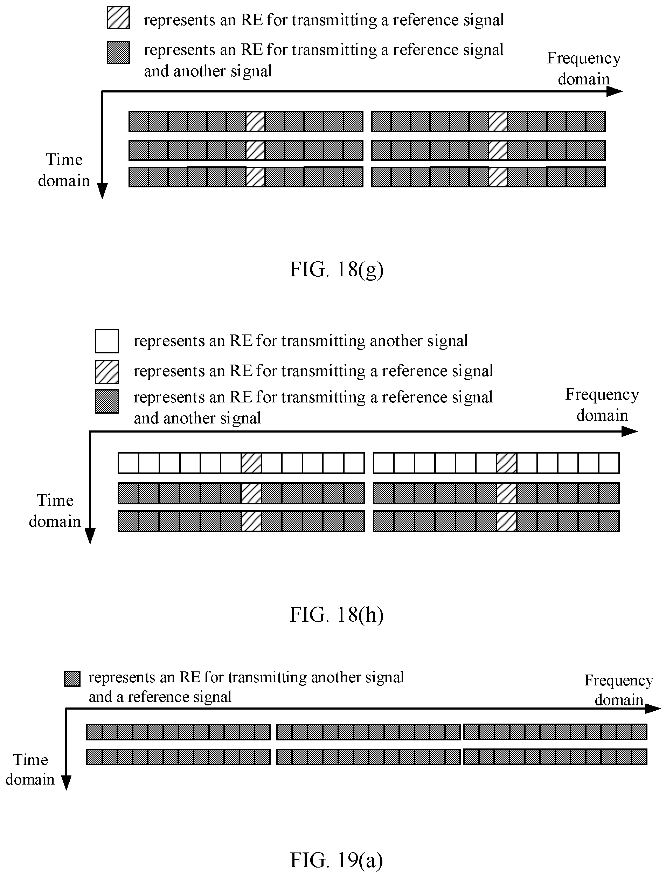

Referring to FIG. 18(g), one CCE may include 6 REGs, where the 6 REGs respectively occupy three symbols in a sequence from early to late in time domain: a symbol 0 to a symbol 2, and each symbol includes two REGs. In addition, in each RE, the index of the RE starts from 0 and is numbered in ascending order of frequency. For the two REGs in the symbol 0, the REG shown in FIG. 17(b) may be adopted. That is to say, in the two REGs in the symbol 0, only an RE 5 may be used for transmitting a reference signal and cannot be used for transmitting another signal. Other REs may be used for transmitting the reference signal and another signal. For the REGs in the symbol 1 and the symbol 2, the REG shown in FIG. 15 may be adopted. In other words, for the REGs in the symbol 1 and the symbol 2, all included REs may be used for transmitting the reference signal and another signal.

In embodiments of this application, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1 and the symbol 2, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1 and the symbol 2, the terminal device may also perform communication based only on the rough channel estimation result. Moreover, because REGs in the symbol 0 include three orthogonal RS REs, channel estimation may be performed based on the CCE regardless of whether the terminal device supports receiving an RS RE that is transmitted in a non-orthogonal transmission manner. This helps extend a scenario to which the CCE is applicable, so as to be compatible with a terminal device failing to support receiving an RS RE that is transmitted in a non-orthogonal transmission manner. The terminal device failing to support receiving an RS RE that is transmitted in a non-orthogonal transmission manner may perform channel estimation based on the REGs in the symbol 0 in the CCE. The terminal device that supports receiving an RS RE that is transmitted in a non-orthogonal transmission manner may perform channel estimation based on REGs in all symbols in the CCE.

Referring to FIG. 18(h), one CCE may include 6 REGs, where the 6 REGs respectively occupy three symbols in a sequence from early to late in time domain: a symbol 0 to a symbol 2, and each symbol includes two REGs. In addition, in each RE, the index of the RE starts from 0 and is numbered in ascending order of frequency. For the two REGs in the symbol 0, an RE 5 may be set as an orthogonal RS RE, and other REs are only used for transmitting another signal. In other words, the RE 5 may be used for transmitting a reference signal but cannot be used for transmitting the another signal. For the REGs in the symbol 1 and the symbol 2, the REG shown in FIG. 15 may be adopted. In other words, for the REGs in the symbol 1 and the symbol 2, all included REs may be used for transmitting the reference signal and another signal.

In embodiments of this application, the CCE includes two types of REGs. A first-type REG includes an orthogonal RS RE, and a second-type REG includes only a non-orthogonal RS RE. Therefore, the CCE may also be referred to as a "CCE hybrid structure". Such a CCE has the advantages described above with respect to the two types of REG. In addition, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1 and the symbol 2, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1 and the symbol 2, the terminal device may also perform communication based only on the rough channel estimation result. Moreover, because REGs in the symbol 0 include three orthogonal RS REs, channel estimation may be performed based on the CCE regardless of whether the terminal device supports receiving an RS RE that is transmitted in a non-orthogonal transmission manner. This helps extend a scenario to which the CCE is applicable, so as to be compatible with a terminal device failing to support receiving an RS RE that is transmitted in a non-orthogonal transmission manner. The terminal device failing to support receiving an RS RE that is transmitted in a non-orthogonal transmission manner may perform channel estimation based on the REGs in the symbol 0 in the CCE. The terminal device that supports receiving an RS RE that is transmitted in a non-orthogonal transmission manner may perform channel estimation based on REGs in all symbols in the CCE.

The CCE in an embodiment of this application is described above with reference to FIG. 18(a) to FIG. 18(h). An arrangement manner of 6 REGs included in the CCE is presented as 3 rows in time domain and 2 columns in frequency domain. The CCE in another embodiment of this application is described below with reference to FIG. 19(a) to FIG. 19(h). An arrangement manner of 6 REGs included in the CCE is presented as 2 rows in time domain and 3 columns in frequency domain.

Referring to FIG. 19(a), one CCE may include 6 REGs, and each REG in the 6 REGs adopts the REG shown in FIG. 15. Therefore, the CCE shown in FIG. 19(a) has the advantages described above with reference to FIG. 15. For brevity, details are not described herein again. In addition, since each REG in the 6 REGs adopts the REG shown in FIG. 15, the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

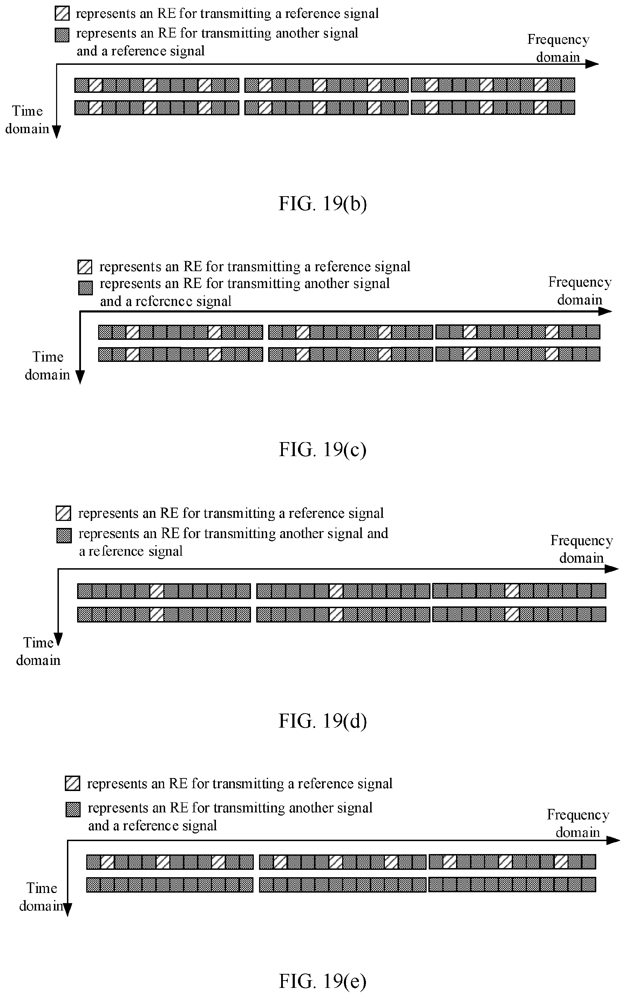

Referring to FIG. 19(b), one CCE may include 6 REGs, and each REG in the 6 REGs adopts the REG shown in FIG. 16. Therefore, the CCE shown in FIG. 19(b) has the advantages described above with reference to FIG. 16. For brevity, details are not described herein again. In addition, since each REG in the 6 REGs adopts the REG shown in FIG. 16, the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 19(c), one CCE may include 6 REGs, and each REG in the 6 REGs adopts the REG shown in FIG. 17(a). Therefore, the CCE shown in FIG. 19(c) has the advantages described above with reference to FIG. 17(a). For brevity, details are not described herein again. Since each REG in the 6 REGs adopts the REG shown in FIG. 17(a), the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 19(d), one CCE may include 6 REGs, and each REG in the 6 REGs adopts the REG shown in FIG. 17(b). Therefore, the CCE shown in FIG. 19(d) has the advantages described above with reference to FIG. 17(b). For brevity, details are not described herein again. Since each REG in the 6 REGs adopts the REG shown in FIG. 17(b), the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 19(e), one CCE may include 6 REGs, where the 6 REGs respectively occupy two symbols in a sequence from early to late in time domain: a symbol 0 and a symbol 1, and each symbol includes three REGs. For the two REGs in the symbol 0, the REG shown in FIG. 16 may be adopted. For the REGs in the symbol 1, the REG shown in FIG. 15 may be adopted. In other words, for the REGs in the symbol 1, all included REs may be used for transmitting the reference signal and another signal.

In embodiments of this application, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1, the terminal device may also perform communication based only on the rough channel estimation result.

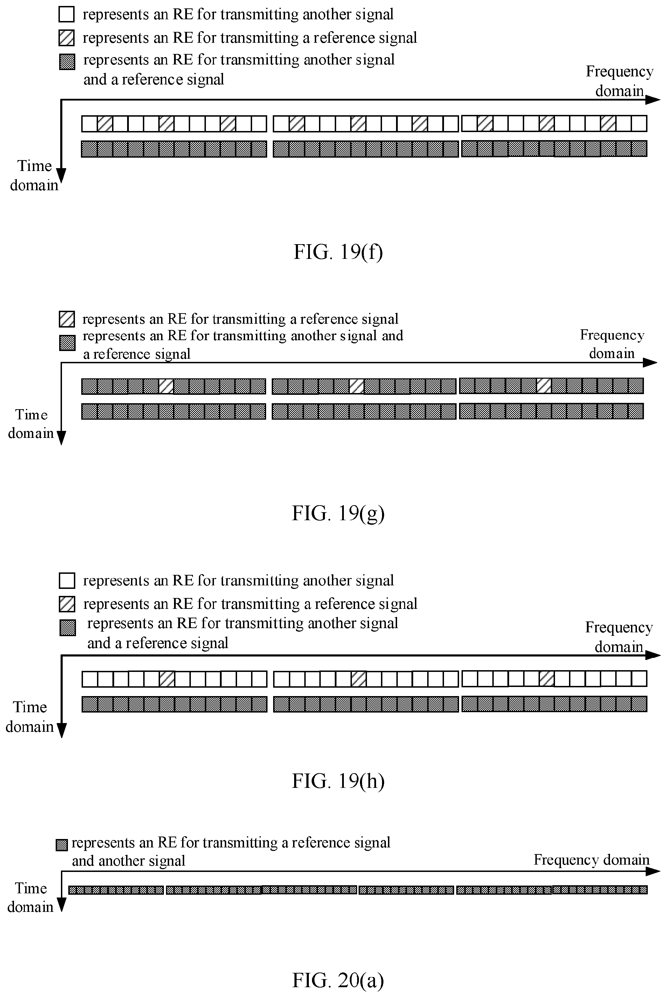

Referring to FIG. 19(f), one CCE may include 6 REGs, where the 6 REGs respectively occupy two symbols in a sequence from early to late in time domain: a symbol 0 and a symbol 1, and each symbol includes two REGs. For the two REGs in the symbol 0, the REG shown in FIG. 9 may be adopted. For the REGs in the symbol 0, the REG shown in FIG. 15 may be adopted. In other words, for the REGs in the symbol 1, all included REs may be used for transmitting the reference signal and another signal.

In embodiments of this application, the CCE includes two types of REGs. A first-type REG includes an orthogonal RS RE, and a second-type REG includes only a non-orthogonal RS RE. Therefore, the CCE may also be referred to as a "CCE hybrid structure". Such a CCE has the advantages described above with respect to the two types of REG. In addition, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1, the terminal device may also perform communication based only on the rough channel estimation result.

Referring to FIG. 19(g), one CCE may include 6 REGs, where the 6 REGs respectively occupy two symbols in a sequence from early to late in time domain: a symbol 0 and a symbol 1, and each symbol includes two REGs. In addition, in each RE, the index of the RE starts from 0 and is numbered in ascending order of frequency. For the two REGs in the symbol 0, an RE 5 may be set as an orthogonal RS RE, and other REs may be set as non-orthogonal RS REs. That is, in the two REGs in the symbol 0, only the RE 5 may be used for transmitting a reference signal and cannot be used for transmitting another signal. The other REs may be used to transmit the reference signal and another signal. For the REGs in the symbol 1, the REG shown in FIG. 15 may be adopted. In other words, for the REGs in the symbol 1, all included REs may be used for transmitting the reference signal and another signal.

In embodiments of this application, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1, the terminal device may also perform communication based only on the rough channel estimation result. Moreover, because REGs in the symbol 0 include three orthogonal RS REs, channel estimation may be performed based on the CCE regardless of whether the terminal device supports receiving an RS RE that is transmitted in a non-orthogonal transmission manner. This helps extend a scenario to which the CCE is applicable, so as to be compatible with a terminal device failing to support receiving an RS RE that is transmitted in a non-orthogonal transmission manner. The terminal device failing to support receiving an RS RE that is transmitted in a non-orthogonal transmission manner may perform channel estimation based on the REGs in the symbol 0 in the CCE. The terminal device that supports receiving an RS RE that is transmitted in a non-orthogonal transmission manner may perform channel estimation based on REGs in all symbols in the CCE.

Referring to FIG. 19(h), one CCE may include 6 REGs, where the 6 REGs respectively occupy two symbols in a sequence from early to late in time domain: a symbol 0 and a symbol 1, and each symbol includes two REGs. In addition, in each RE, the index of the RE starts from 0 and is numbered in ascending order of frequency. For the two REGs in the symbol 0, an RE 5 may be set as an orthogonal RS RE, and other REs are only used for transmitting another signal. In other words, the RE 5 may be used for transmitting a reference signal but cannot be used for transmitting the another signal. For the REGs in the symbol 1, the REG shown in FIG. 15 may be adopted. In other words, for the REGs in the symbol 1, all included REs may be used for transmitting the reference signal and another signal.

In embodiments of this application, the CCE includes two types of REGs. A first-type REG includes an orthogonal RS RE, and a second-type REG includes only a non-orthogonal RS RE. Therefore, the CCE may also be referred to as a "CCE hybrid structure". Such a CCE has the advantages described above with respect to the two types of REG. In addition, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1, the terminal device may also perform communication based only on the rough channel estimation result. Moreover, because REGs in the symbol 0 include three orthogonal RS REs, channel estimation may be performed based on the CCE regardless of whether the terminal device supports receiving an RS RE that is transmitted in a non-orthogonal transmission manner. This helps extend a scenario to which the CCE is applicable, so as to be compatible with a terminal device failing to support receiving an RS RE that is transmitted in a non-orthogonal transmission manner. The terminal device failing to support receiving an RS RE that is transmitted in a non-orthogonal transmission manner may perform channel estimation based on the REGs in the symbol 0 in the CCE. The terminal device that supports receiving an RS RE that is transmitted in a non-orthogonal transmission manner may perform channel estimation based on REGs in all symbols in the CCE.

The CCE in another embodiment of this application is described below with reference to FIG. 19(a) to FIG. 19(h). An arrangement manner of 6 REGs included in the CCE is presented as 2 rows in time domain and 3 columns in frequency domain. The CCE in another embodiment of this application is described below with reference to FIG. 20(a) to FIG. 20(f). An arrangement manner of 6 REGs included in the CCE is presented as 1 row in time domain and 6 columns in frequency domain.

Referring to FIG. 20(a), one CCE may include 6 REGs, and each REG in the 6 REGs adopts the REG shown in FIG. 15. Therefore, the CCE shown in FIG. 20(a) has the advantages described above with reference to FIG. 15. For brevity, details are not described herein again. In addition, since each REG in the 6 REGs adopts the REG shown in FIG. 15, the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

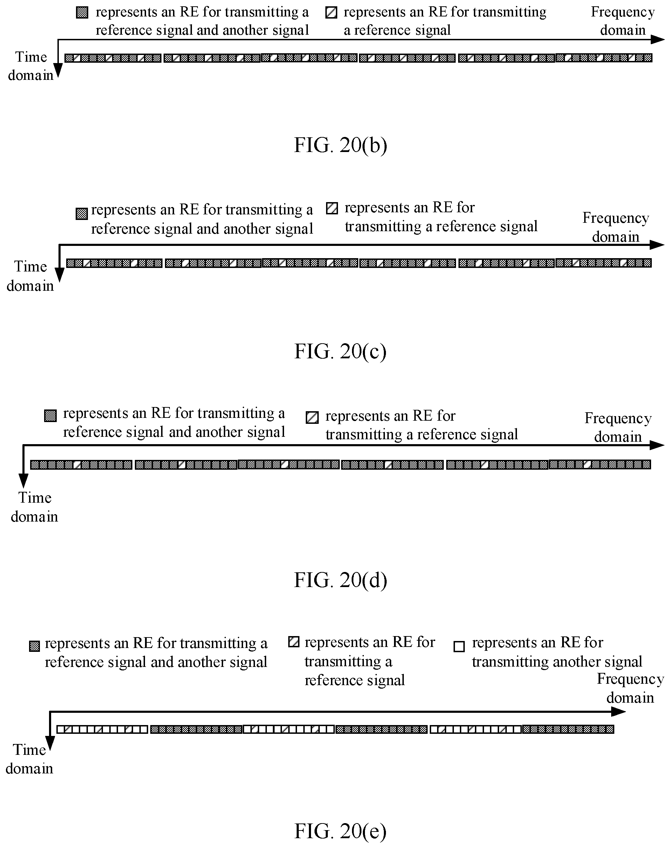

Referring to FIG. 20(b), one CCE may include 6 REGs, and each REG in the 6 REGs adopts the REG shown in FIG. 16. Therefore, the CCE shown in FIG. 20(b) has the advantages described above with reference to FIG. 16. For brevity, details are not described herein again. In addition, since each REG in the 6 REGs adopts the REG shown in FIG. 16, the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 20(c), one CCE may include 6 REGs, and each REG in the 6 REGs adopts the REG shown in FIG. 17(a). Therefore, the CCE shown in FIG. 20(c) has the advantages described above with reference to FIG. 17(a). For brevity, details are not described herein again. Since each REG in the 6 REGs adopts the REG shown in FIG. 17(a), the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 20(d), one CCE may include 6 REGs, and each REG in the 6 REGs adopts the REG shown in FIG. 17(b). Therefore, the CCE shown in FIG. 20(d) has the advantages described above with reference to FIG. 17(b). For brevity, details are not described herein again. Since each REG in the 6 REGs adopts the REG shown in FIG. 17(b), the 6 REGs may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 20(e), one CCE may include 6 REGs, where the 6 REGs occupy 1 symbol in time domain: symbol 0, and the index of the REG starts from 0 and is numbered in ascending order of frequency: an REG 0 to an REG 5. For the REG 0, REG 2 and REG 4, the REG shown in FIG. 9 may be adopted. For the REG 1, REG 3 and REG 5, the REG shown in FIG. 15 may be adopted; that is to say, for the REG 1, REG 3 and REG 5, all included REs may be used for transmitting a reference signal and another signal.

In embodiments of this application, the CCE includes two types of REGs. A first-type REG includes an orthogonal RS RE, and a second-type REG includes only a non-orthogonal RS RE. Therefore, the CCE may also be referred to as a "CCE hybrid structure". Such a CCE has the advantages described above with respect to the two types of REG. In addition, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1, the terminal device may also perform communication based only on the rough channel estimation result.

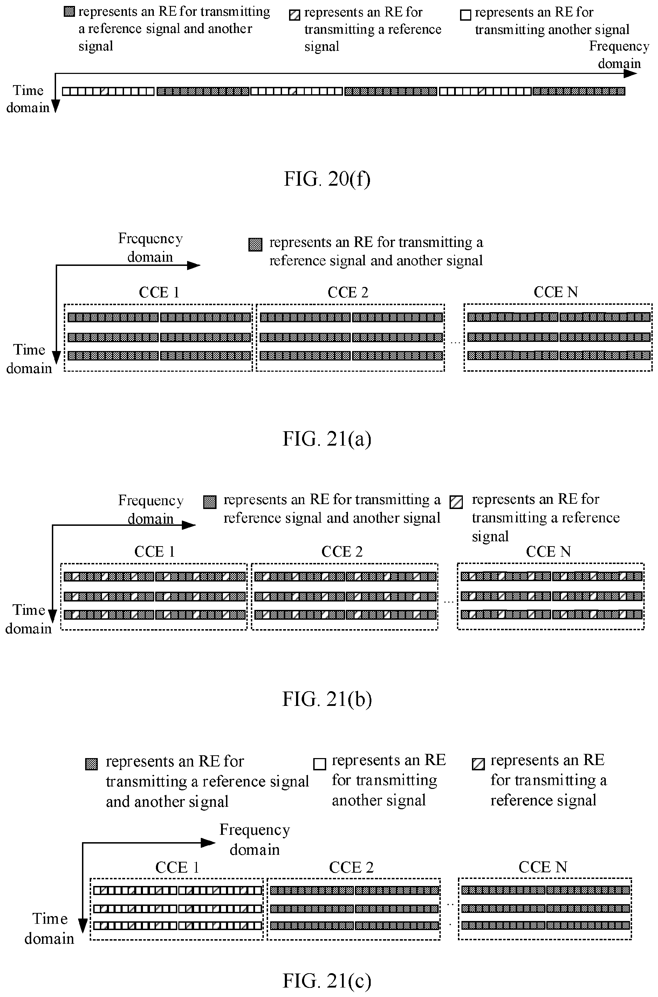

Referring to FIG. 20(f), one CCE may include 6 REGs, where the 6 REGs occupy 1 symbol in a sequence from early to late in time domain: symbol 0, and the index of the REG starts from 0 and is numbered in ascending order of frequency: REG 0 to REG 5. For the REG 1, REG 3 and REG 5, an RE 5 in each REG may be set as an orthogonal RS RE, that is, the RE 5 is used for transmitting a reference signal, and remaining REs in the REG are used for transmitting another signal. For the REGs in the symbol 0, the REG shown in FIG. 15 may be adopted. In other words, for the REGs in the symbol 1, all included REs may be used for transmitting the reference signal and another signal.

In embodiments of this application, the CCE includes two types of REGs. A first-type REG includes an orthogonal RS RE, and a second-type REG includes only a non-orthogonal RS RE. Therefore, the CCE may also be referred to as a "CCE hybrid structure". Such a CCE has the advantages described above with respect to the two types of REG. In addition, an REG that includes an orthogonal RS RE is set in the symbol 0, which is earlier than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1, the terminal device may also perform communication based only on the rough channel estimation result.

As described above, the first PDCCH may further include the second resource element of the second type. For ease of understanding, several common first-type REGs provided in an embodiment of this application are described below with reference to FIG. 21(a) to FIG. 21(c).

Referring to FIG. 21(a), one PDCCH may include N CCEs, each CCE includes 6 REGs, and each REG adopts the REG shown in FIG. 15. Therefore, the CCE shown in FIG. 21(a) has the advantages described above with reference to FIG. 15. For brevity, details are not described herein again. In addition, because each of the N CCEs includes 6 REGs shown in FIG. 15, REGs in each CCE may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 21(b), one PDCCH may include N CCEs, each CCE includes 6 REGs, and each REG adopts the REG shown in FIG. 16. Therefore, the CCE shown in FIG. 21(a) has the advantages described above with reference to FIG. 16. For brevity, details are not described herein again. In addition, because each of the N CCEs includes 6 REGs shown in FIG. 16, REGs in each CCE may be determined based on a same ratio, where the ratio is used to indicate a ratio between a quantity of orthogonal RS REs and a quantity of non-orthogonal RS REs included in the REG, which helps to reduce complexity of configuring the CCE.

Referring to FIG. 21(c), one PDCCH may include N CCEs, and the index of the N CCEs starts from 1 and is numbered in ascending order of frequency: CCE 0 to CCE 5. The CCE 1 may include 6 REGs shown in FIG. 9. For the CCE 2 to CCE N, each CCE includes 6 REGs shown in FIG. 15. That is to say, for the CCE 2 to CCE N, all included REGs may be used for transmitting a reference signal and another signal.

In embodiments of this application, the PDCCH includes two types of CCEs. A first-type CCE includes an orthogonal RS RE, and a second-type CCE includes only a non-orthogonal RS RE. Therefore, the PDCCH may also be referred to as a "PDCCH hybrid structure". Such a CCE has the advantages described above with respect to the two types of CCE. In addition, an REG that includes an orthogonal RS RE is set in the symbol 0, which is not later than an REG that does not include an orthogonal RS RE in time domain. This helps a terminal device perform channel estimation based on the REG that includes an RS RE as early as possible, so as to reduce time for obtaining channel estimation. This also helps improve a possibility of obtaining a channel estimation result by the terminal device. For example, the terminal device obtains a rough channel estimation result based on the REG that includes an RS RE in the symbol 0, and then the terminal device may continue to perform channel estimation based on the REGs in the symbol 1, so as to improve accuracy of channel estimation. For another example, the terminal device obtains a rough channel estimation result based on the REG that includes an RS RE in the symbol 0. Then, if the terminal device cannot continue to perform channel estimation based on the REGs in the symbol 1, the terminal device may also perform communication based only on the rough channel estimation result.

### Embodiment 2: The first resource element of the first type is a CCE.

In some implementations, in a first-type CCE, part or all of transmission resources occupied by a reference signal may be used for transmitting another signal. Therefore, in embodiments of this application, the first resource element of the first type is similar to the second resource element of the first type described above. For details, refer to the foregoing description.

It should be noted that, in embodiments of this application, a transmission resource included in the first resource element of the first type is not limited. In other words, in embodiments of this application, transmission resources included in the first resource element of the first type may be divided at a granularity of an REG. In this case, the first resource element of the first type has exactly the same meaning as the second resource element of the first type. Certainly, in embodiments of this application, the transmission resource included in the first resource element of the first type may be divided at a granularity of an RE, and is not divided at a granularity of an REG. In this case, a meaning of the first resource element of the first type is slightly different from that of the second resource element of the first type described above. That is, the foregoing related description that the second resource element of the first type includes an REG is replaced with that the second resource element of the first type includes an RE. For brevity, details are not described herein again.

The foregoing describes the first resource element and the second resource element in embodiments of this application. The following describes a configuration process of the first resource element and the second resource element in embodiments of this application.

In some implementations, the method further includes: transmitting, by a network device, first configuration information to a terminal device, where the first configuration information is used to configure the first resource element of the first type.

A manner of carrying the first configuration information is not limited in embodiments of this application. For example, the first configuration information may be carried in radio resource control (radio resource control, RRC) signalling. For another example, the first configuration information may be carried in a medium access control control element (media access control control element, MAC CE). For another example, the first configuration information may be carried in system information. For another example, the first configuration information may be carried in a CORESET configuration. For another example, the first configuration information may be carried in a search space (search space) configuration.

In some implementations, the first configuration information is used for indicating one or more of the following: model information corresponding to the first resource element of the first type; AI function information corresponding to the first resource element of the first type; AI feature information corresponding to the first resource element of the first type; a transmission resource occupied by the reference signal in the first resource element of the first type; or whether a transmission resource occupied by the reference signal in the first resource element of the first type is available for transmitting the another signal.

For example, the first configuration information is used for indicating model information corresponding to the first resource element of the first type. In some implementations, the model information corresponding to the first resource element of the first type may include model information of a first model. The first model is configured to receive the reference signal and/or the another signal transmitted by using the first resource element of the first type. Certainly, in embodiments of this application, the first model may alternatively be used to generate a non-orthogonally transmitted signal based on the reference signal and another signal, so as to transmit the signal on the first resource element of the first type.

The model information is not limited in embodiments of this application. In some implementations, the model information is used for indicating the first model. For example, the first model may include a model identifier of the first model, which helps reduce overheads of transmitting the model information. In some other implementations, the model information may include a model structure of the first model and/or a model parameter of the first model, so that the terminal device deploys the first model.

For example, the first configuration information is used for indicating the AI function corresponding to the first resource element of the first type. In some implementations, the AI function may include a function for receiving the reference signal and/or the another signal transmitted by using the first resource element of the first type; or the AI function may include a function for performing channel estimation based on the reference signal transmitted by the first resource element of the first type, or the AI function may include a function for performing reception based on the another signal transmitted by using the first resource element of the first type. Certainly, in embodiments of this application, the AI function may include a function for generating a non-orthogonally transmitted signal based on the reference signal and another signal, so that the non-orthogonally transmitted signal is subsequently transmitted on the first resource element of the first type.

In embodiments of this application, an indication manner of the AI function is not limited. In some implementations, the AI function may be indicated by adding an AI function identifier to the first configuration information. Certainly, in embodiments of this application, the AI function may be further indicated by carrying a model identifier used to implement the AI function.

For example, the first configuration information is used for indicating an AI feature (feature) corresponding to the first resource element of the first type. In some implementations, the AI feature may include a feature used for receiving the reference signal and/or another signal transmitted by using the first resource element of the first type; or the AI feature may include a feature for performing channel estimation based on the reference signal transmitted by the first resource element of the first type, or the AI feature may include a feature for performing reception based on the another signal transmitted by using the first resource element of the first type. Certainly, in embodiments of this application, the AI feature may include a feature for generating a non-orthogonally transmitted signal based on the reference signal and another signal, so that the non-orthogonally transmitted signal is subsequently transmitted on the first resource element of the first type.

In embodiments of this application, an indication manner of the AI feature is not limited. In some implementations, the AI feature may be indicated by adding an AI feature identifier to the first configuration information. Certainly, in embodiments of this application, the AI feature may be further indicated by carrying a model identifier used to implement the AI feature.

For example, the first configuration information is used for indicating a transmission resource occupied by the reference signal in the first resource element of the first type. In some implementations, the first configuration information may include one or more of the following: a location of a transmission resource occupied by the reference signal in the first resource element of the first type; a quantity of transmission resources occupied by the reference signal in the first resource element of the first type; or an index of the transmission resource occupied by the reference signal in the first resource element of the first type. Certainly, in embodiments of this application, the first configuration information may be further used for indicating whether the first resource element of the first type includes a transmission resource available for simultaneously transmitting the reference signal and another signal.

In some implementations, the location of the transmission resource occupied by the reference signal in the first resource element of the first type may include a time domain location and/or a frequency domain location.

The first configuration information is used for indicating whether the transmission resource occupied by the reference signal in the first resource element of the first type is used for transmitting the another signal. In some scenarios, the first resource element of the first type may include part of transmission resources only available for transmitting the reference signal. In other words, not all transmission resources in the first resource element of the first type may available for simultaneously transmitting the reference signal and another signal. In this case, the first configuration information may be used for indicating a transmission resource available for simultaneously transmitting the another signal and reference signal.

In some other scenarios, all transmission resources in the first resource element of the first type are available for simultaneously transmitting the reference signal and another signal. However, in an actual transmission process, the reference signal and another signal may be simultaneously transmitted only on part of transmission resources. In this case, a transmission resource for simultaneously transmitting the another signal and reference signal may be indicated by using the first configuration information.

In some implementations, to improve accuracy of configuring the first resource element of the first type, the first resource element of the first type may be configured for an operating bandwidth in which the terminal device is located. In embodiments of this application, the operating bandwidth is not limited. For example, the operating bandwidth may be a frequency domain range. For another example, the operating bandwidth may be a system bandwidth. For another example, the operating bandwidth may be a bandwidth part (carrier bandwith part, BWP). For example, the operating bandwidth is a BWP. The first configuration information is used to configure the first resource element of the first type for a first BWP.

In some implementations, the network device may configure the first resource element of the first type for each BWP. Correspondingly, if the terminal device switches the BWP, the configuration information may be switched at the same time. In other words, the method further includes: in a case that the terminal device switches from a second BWP to the first BWP, switching, by the terminal device, from configuration information corresponding to the second BWP to the first configuration information, where the configuration information corresponding to the second

BWP is used for configuring the first resource element of the first type for the second BWP.

In embodiments of this application, the first configuration information and the configuration information corresponding to the second BWP are not limited. In some implementations, a first resource element of the first type (also referred to as "first resource element 1") configured in the first configuration information may be different from a first resource element of the first type (also referred to as "first resource element 2") configured in the configuration information corresponding to the second BWP. For example, a location of a transmission resource available for transmitting the reference signal and another signal in the first resource element 1 is different from a location of a transmission resource available for transmitting the reference signal and another signal in the first resource element 2. Certainly, in embodiments of this application, a location of a transmission resource available for transmitting the reference signal and another signal in the first resource element 1 may be the same as a location of a transmission resource available for transmitting the reference signal and another signal in the first resource element 2.

For example, a quantity of transmission resources available for transmitting the reference signal and another signal in the first resource element 1 is different from a quantity of transmission resources available for transmitting the reference signal and another signal in the first resource element 2. Certainly, in embodiments of this application, a quantity of transmission resources available for transmitting the reference signal and another signal in the first resource element 1 may be the same as a quantity of transmission resources available for transmitting the reference signal and another signal in the first resource element 2.

In embodiments of this application, the kind of the first resource element of the first type configured in the first configuration information is not limited. In some implementations, the first configuration information is used to configure one kind of first resource element of the first type. In some other implementations, the first configuration information is used to configure a plurality of kinds of first resource elements of the first type. In different kinds of first resource elements of the first type, different transmission resources may be used for simultaneously transmitting the reference signal and another signal. For example, the first configuration information may be used to simultaneously configure two kinds of first resource elements of the first type shown in FIG. 17(a) and FIG. 17(b).

In some implementations, if the first configuration information configures a plurality of kinds of first resource elements of the first type for the terminal device, the network device may transmit first indication information to the terminal device, to instruct to activate one kind of first resource element from the plurality of kinds of first resource elements of the first type. In embodiments of this application, the network device may activate one kind of first resource elements from the plurality of kinds of first resource elements of the first type by using the first indication information, which helps improve flexibility of activating the first resource element.

A manner of carrying the first indication information is not limited in embodiments of this application. For example, the first indication information may be carried in DCI. For another example, the first indication information may be carried in a MAC CE.

In some implementations, a first timer is used for indicating use duration of the first resource element of the first type. For example, in response to activating or configuring the first resource element of the first type, the terminal device starts the first timer; and during running of the first timer, the terminal device detects a first PDCCH based on the first resource element of the first type. That is to say, during running of the first timer, the first PDCCH is transmitted based on the first resource element of the first type.

Correspondingly, the network device also needs to determine the use duration of the first resource element of the first type by using the first timer, so as to transmit the first PDCCH to the terminal device based on the first resource element of the first type. For example, in response to activating or configuring the first resource element of the first type, the network device starts the first timer; and during running of the first timer, the network device transmits the first PDCCH based on the first resource element of the first type. That is to say, during running of the first timer, the first PDCCH is transmitted based on the first resource element of the first type.

In some implementations, during running of the first timer, the terminal device may use the first configuration information described above. For example, if the first configuration information is used to configure the AI function corresponding to the first resource element of the first type, during running of the first timer, the terminal device may execute the AI function corresponding to the first resource element of the first type. For another example, if the first configuration information is used to configure the AI feature corresponding to the first resource element of the first type, during running of the first timer, the terminal device may execute the AI feature corresponding to the first resource element of the first type.

In some other implementations, during running of the first timer, the network device may use the first configuration information described above. For example, if the first configuration information is used to configure the AI function corresponding to the first resource element of the first type, during running of the first timer, the network device may execute the AI function corresponding to the first resource element of the first type. For another example, if the first configuration information is used to configure the AI feature corresponding to the first resource element of the first type, during running of the first timer, the network device may execute the AI feature corresponding to the first resource element of the first type.

In addition, as described above, the first configuration information may be used to configure a plurality of kinds of first resource elements of the first type. In this case, each kind of the plurality of kinds of first resource elements of the first type may correspond to one timer. In some other scenarios, if the first configuration information may be used to configure a plurality of kinds of first resource elements of the first type, the first configuration information may include corresponding configuration information of each kind of first resource element of the first type. Correspondingly, the corresponding configuration information of each kind of first resource element of the first type may correspond to an independent timer. During the running of the timer, the corresponding configuration information may be used.

In embodiments of this application, the first timer is not limited. For example, the first timer may be a countdown timer. Correspondingly, the terminal device starts a countdown timer in response to activating or configuring the first resource element of the first type; and before the countdown timer runs down to 0, the terminal device detects the first PDCCH on the first resource element of the first type. Correspondingly, the network device starts a countdown timer in response to activating or configuring the first resource element of the first type; and before the countdown timer runs down to 0, the network device transmits the first PDCCH on the first resource element of the first type.

In addition, in embodiments of this application, activating or configuring the first resource element of the first type is not limited. For example, activating the first resource element of the first type may include activating the first resource element of the first type by using the first indication information. For example, configuring the first resource element of the first type may include configuring the first resource element of the first type by using the first configuration information.

In some implementations, the method includes: performing, by the terminal device, a first operation in response to that the first timer expires, where the first operation includes one of the following: communicating based on a default first resource element; communicating based on a first resource element of a second type; communicating based on a second resource element of a second type, or detecting a second PDCCH.

In some other implementations, the method includes: performing, by the network device, a first operation in response to that a second timer expires, where the first operation includes one of the following: communicating based on a default first resource element; communicating based on a first resource element of a second type; communicating based on a second resource element of a second type, or transmitting a second PDCCH.

For example, the first operation includes the communicating based on the default first resource element. In some implementations, the default first resource element is a first resource element of the first type. As described above, there may be a plurality of kinds of first resource elements of the first type. Correspondingly, in the plurality of kinds of first resource elements of the first type, a first resource element of the first type that includes more transmission resources for simultaneously transmitting the reference signal and another signal may be used as the default first resource element, which helps improve accuracy of channel estimation.

For example, the first operation includes the communicating based on the first resource element of the second type, where a transmission resource occupied by a reference signal in the first resource element of the second type is not used for transmitting the another signal. Therefore, if the first timer expires, the terminal device may perform communication by using the first resource element of the second type, which helps improve accuracy of channel estimation.

For example, the first operation includes the communicating based on the second resource element of the second type, where a transmission resource occupied by a reference signal in the second resource element of the second type is not used for transmitting the another signal. Therefore, if the first timer expires, the terminal device may perform communication by using the second resource element of the second type, which helps improve accuracy of channel estimation.

For example, the first operation includes the detecting the second PDCCH (or transmitting the second PDCCH). In other words, if the first timer expires, the network device may transmit the second PDCCH to the terminal device, where a transmission resource occupied by a reference signal in the second PDCCH is not used for transmitting the another signal. In embodiments of this application, if the first timer expires, the network device may transmit a legacy second PDCCH to the terminal device, to ensure reception performance of a PDCCH.

In some implementations, the first resource element of the first type is a first kind of first resource element in the plurality of kinds of first resource elements of the first type, the plurality of kinds of first resource elements of the first type further include a second kind of first resource element, and the method further includes: in response to that the first timer expires, performing, by the terminal device, communication based on the second kind of first resource element. Correspondingly, in response to that the first timer expires, the network device performs communication based on the second kind of first resource element.

In embodiments of this application, the second kind of first resource element is not limited. For example, the second kind of first resource element may be a first resource element of the first type that includes the largest quantity of orthogonal RS REs in the plurality of kinds of first resource elements of the first type, which helps improve reliability of channel estimation.

The foregoing describes a configuration manner of the first resource element of the first type in embodiments of this application with reference to the first configuration information. The following describes a configuration manner of the second resource element of the first type in embodiments of this application with reference to second configuration information. It should be noted that, in embodiments of this application, the first configuration information and the second configuration information may be same configuration information, or the first configuration information and the second configuration information may be different configuration information.

In some implementations, the method further includes: transmitting, by the network device, second configuration information to the terminal device, where the second configuration information is used for configuring the second resource element of the first type.

In embodiments of this application, a manner of carrying the second configuration information is not limited. For example, the second configuration information may be carried in RRC signaling. For another example, the second configuration information may be carried in a MAC CE. For another example, the second configuration information may be carried in system information. For another example, the second configuration information may be carried in a CORESET configuration. For another example, the second configuration information may be carried in a search space (search space) configuration.

In some implementations, the second configuration information is used to indicate one or more of the following: model information corresponding to the second resource element of the first type; AI function information corresponding to the second resource element of the first type; AI feature information corresponding to the second resource element of the first type; a transmission resource occupied by the reference signal in the second resource element of the first type; or whether a transmission resource occupied by the reference signal in the second resource element of the first type is available for transmitting the another signal.

For example, the second configuration information is used for indicating model information corresponding to the second resource element of the first type. In some implementations, the model information corresponding to the second resource element of the first type may include model information of a first model. The first model is configured to receive the reference signal and/or the another signal transmitted by using the second resource element of the first type. Certainly, in embodiments of this application, the first model may alternatively be used to generate a non-orthogonally transmitted signal based on the reference signal and another signal, so as to transmit the signal on the second resource element of the first type.

The model information is not limited in embodiments of this application. In some implementations, the model information is used for indicating the first model. For example, the first model may include a model identifier of the first model, which helps reduce overheads of transmitting the model information. In some other implementations, the model information may include a model structure of the first model and/or a model parameter of the first model, so that the terminal device deploys the first model.

For example, the second configuration information is used for indicating the AI function corresponding to the second resource element of the first type. In some implementations, the AI function may include a function for receiving the reference signal and/or the another signal transmitted by using the second resource element of the first type; or the AI function may include a function for performing channel estimation based on the reference signal transmitted by the second resource element of the first type, or the AI function may include a function for performing reception based on the another signal transmitted by using the second resource element of the first type. Certainly, in embodiments of this application, the AI function may include a function for generating a non-orthogonally transmitted signal based on the reference signal and another signal, so that the non-orthogonally transmitted signal is subsequently transmitted on the second resource element of the first type.

In embodiments of this application, an indication manner of the AI function is not limited. In some implementations, the AI function may be indicated by adding an AI function identifier to the second configuration information. Certainly, in embodiments of this application, the AI function may be further indicated by carrying a model identifier used to implement the AI function.

For example, the second configuration information is used for indicating an AI feature (feature) corresponding to the second resource element of the first type. In some implementations, the AI feature may include a feature for receiving the reference signal and/or another signal transmitted by using the second resource element of the first type, or the AI feature may include a feature for performing channel estimation based on the reference signal transmitted by the second resource element of the first type, or the AI feature may include a feature for performing reception based on the another signal transmitted by the second resource element of the first type. Certainly, in embodiments of this application, the AI feature may include a feature for generating a non-orthogonally transmitted signal based on the reference signal and another signal, so that the non-orthogonally transmitted signal is subsequently transmitted on the second resource element of the first type.

In embodiments of this application, an indication manner of the AI feature is not limited. In some implementations, the AI feature may be indicated by adding an AI feature identifier to the second configuration information. Certainly, in embodiments of this application, the AI feature may be further indicated by carrying a model identifier used to implement the AI feature.

For example, the second configuration information is used for indicating a transmission resource occupied by the reference signal in the second resource element of the first type. In some implementations, the second configuration information may include one or more of the following: a location of a transmission resource occupied by the reference signal in the second resource element of the first type; a quantity of transmission resources occupied by the reference signal in the second resource element of the first type; or an index of the transmission resource occupied by the reference signal in the second resource element of the first type. Certainly, in embodiments of this application, the second configuration information may be further used for indicating whether the second resource element of the first type includes a transmission resource available for simultaneously transmitting the reference signal and another signal.

In some implementations, the location of the transmission resource occupied by the reference signal in the second resource element of the first type may include a time domain location and/or a frequency domain location.

The second configuration information is used for indicating whether the transmission resource occupied by the reference signal in the second resource element of the first type is used for transmitting the another signal. In some scenarios, the second resource element of the first type may include part of transmission resources only available for transmitting the reference signal. In other words, not all transmission resources in the second resource element of the first type may available for simultaneously transmitting the reference signal and another signal. In this case, the second configuration information may be used for indicating a transmission resource available for simultaneously transmitting the another signal and reference signal.

In some other scenarios, all transmission resources in the second resource element of the first type are available for simultaneously transmitting the reference signal and another signal. However, in an actual transmission process, the reference signal and another signal may be simultaneously transmitted only on part of transmission resources. In this case, a transmission resource for simultaneously transmitting the another signal and reference signal may be indicated by using the second configuration information.

In some implementations, to improve accuracy of configuring the second resource element of the first type, the second resource element of the first type may be configured for an operating bandwidth in which the terminal device is located. In embodiments of this application, the operating bandwidth is not limited. For example, the operating bandwidth may be a frequency domain range. For another example, the operating bandwidth may be a system bandwidth. For another example, the operating bandwidth may be a BWP. For example, the operating bandwidth is a BWP. The second configuration information is used to configure the second resource element of the first type for a first BWP.

In some implementations, the network device may configure the second resource element of the first type for each BWP. Correspondingly, if the terminal device switches the BWP, the configuration information may be switched at the same time. In other words, the method further includes: in a case that the terminal device switches from a second BWP to the first BWP, switching, by the terminal device, from configuration information corresponding to the second BWP to the second configuration information, where the configuration information corresponding to the second BWP is used for configuring the second resource element of the first type for the second BWP.

In embodiments of this application, the second configuration information and the configuration information corresponding to the second BWP are not limited. In some implementations, a second resource element of the first type (also referred to as "second resource element 1") configured in the second configuration information may be different from a second resource element of the first type (also referred to as "second resource element 2") configured in the configuration information corresponding to the second BWP. For example, a location of a transmission resource available for transmitting the reference signal and another signal in the second resource element 1 is different from a location of a transmission resource available for transmitting the reference signal and another signal in the second resource element 2. Certainly, in embodiments of this application, a location of a transmission resource available for transmitting the reference signal and another signal in the second resource element 1 may be the same as a location of a transmission resource available for transmitting the reference signal and another signal in the second resource element 2.

For example, a quantity of transmission resources available for transmitting the reference signal and another signal in the second resource element 1 is different from a quantity of transmission resources available for transmitting the reference signal and another signal in the second resource element 2. Certainly, in embodiments of this application, a quantity of transmission resources available for transmitting the reference signal and another signal in the second resource element 1 may be the same as a quantity of transmission resources available for transmitting the reference signal and another signal in the second resource element 2.

In embodiments of this application, the kind of the second resource element of the first type configured in the second configuration information is not limited. In some implementations, the second configuration information is used to configure one kind of second resource element of the first type. In some other implementations, the second configuration information is used to configure a plurality of kinds of second resource elements of the first type. In different kinds of second resource elements of the first type, different transmission resources may be used for simultaneously transmitting the reference signal and another signal. For example, the second configuration information may be used for simultaneously configuring the three kinds of second resource elements of the first type shown in FIG. 20(a) to FIG. 20(c).

In some implementations, if the second configuration information configures a plurality of kinds of second resource elements of the first type for the terminal device, the network device may transmit first indication information to the terminal device, to instruct to activate one kind of second resource element from the plurality of kinds of second resource elements of the first type. In embodiments of this application, the network device may activate one kind of second resource elements from the plurality of kinds of second resource elements of the first type by using second indication information, which helps improve flexibility of activating the second resource element.

A manner of carrying the second indication information is not limited in embodiments of this application. For example, the second indication information may be carried in DCI. For another example, the second indication information may be carried in a MAC CE.

In some implementations, a second timer is used for indicating use duration of the second resource element of the first type. For example, in response to activating or configuring the second resource element of the first type, the terminal device starts the second timer; and during running of the second timer, the terminal device detects a first PDCCH based on the second resource element of the first type. That is to say, during running of the second timer, the first PDCCH is transmitted based on the second resource element of the first type.

Correspondingly, the network device also needs to determine the use duration of the second resource element of the first type by using the second timer, so as to transmit the first PDCCH to the terminal device based on the second resource element of the first type. For example, in response to activating or configuring the second resource element of the first type, the network device starts the second timer; and during running of the second timer, the network device transmits the first PDCCH based on the second resource element of the first type. That is to say, during running of the second timer, the first PDCCH is transmitted based on the second resource element of the first type.

In some implementations, during running of the second timer, the terminal device may use the second configuration information described above. For example, if the second configuration information is used to configure the AI function corresponding to the second resource element of the first type, during running of the second timer, the terminal device may execute the AI function corresponding to the second resource element of the first type. For another example, if the second configuration information is used to configure the AI feature corresponding to the second resource element of the first type, during running of the second timer, the terminal device may execute the AI feature corresponding to the second resource element of the first type.

In some implementations, during running of the second timer, the network device may use the second configuration information described above. For example, if the second configuration information is used to configure the AI function corresponding to the second resource element of the first type, during running of the second timer, the network device may perform the AI function corresponding to the second resource element of the first type. For another example, if the second configuration information is used to configure the AI feature corresponding to the second resource element of the first type, during running of the second timer, the network device may execute the AI feature corresponding to the second resource element of the first type.

In addition, as described above, the second configuration information may be used to configure a plurality of kinds of second resource elements of the first type. In this case, each kind of the plurality of kinds of second resource elements of the first type may correspond to one timer. In some other scenarios, if the second configuration information may be used to configure a plurality of kinds of second resource elements of the first type, the second configuration information may include corresponding configuration information of each kind of second resource element of the first type. Correspondingly, the corresponding configuration information of each kind of second resource element of the second type may correspond to an independent timer. During the running of the timer, the corresponding configuration information may be used.

In embodiments of this application, the second timer is not limited. For example, the second timer may be a countdown timer. That is, the terminal device starts a countdown timer in response to activating or configuring the second resource element of the first type; and before the countdown timer runs down to 0, the terminal device detects the first PDCCH on the second resource element of the first type. Correspondingly, the network device starts a countdown timer in response to activating or configuring the second resource element of the first type; and before the countdown timer runs down to 0, the network device transmits the first PDCCH on the second resource element of the first type.

In addition, in embodiments of this application, activating or configuring the second resource element of the first type is not limited. For example, activating the second resource element of the first type may include activating the second resource element of the first type by using the second indication information. For example, configuring the second resource element of the first type may include configuring the second resource element of the first type by using the second configuration information.

In some implementations, the method includes: performing, by the terminal device, a first operation in response to that the second timer expires, where the first operation includes one of the following: communicating based on a default first resource element; communicating based on a first resource element of a second type; communicating based on a second resource element of a second type, or detecting a second PDCCH.

In some other implementations, the method includes: performing, by the network device, a first operation in response to that a second timer expires, where the first operation includes one of the following: communicating based on a default first resource element; communicating based on a first resource element of a second type; communicating based on a second resource element of a second type, or transmitting a second PDCCH.

For example, the first operation includes the communicating based on the default first resource element. In some implementations, the default first resource element is a second resource element of the first type. As described above, there may be a plurality of kinds of second resource elements of the first type. Correspondingly, in the plurality of kinds of second resource elements of the second type, a second resource element of the first type that includes more transmission resources for simultaneously transmitting the reference signal and another signal may be used as the default first resource element, which helps improve accuracy of channel estimation.

For example, the first operation includes the communicating based on the first resource element of the second type, where a transmission resource occupied by a reference signal in the first resource element of the second type is not used for transmitting the another signal. Therefore, if the second timer expires, the terminal device may perform communication by using the first resource element of the second type, which helps improve accuracy of channel estimation.

For example, the first operation includes the communicating based on the second resource element of the second type, where a transmission resource occupied by a reference signal in the second resource element of the second type is not used for transmitting the another signal. Therefore, if the second timer expires, the terminal device may perform communication by using the second resource element of the second type, which helps improve accuracy of channel estimation.

For example, the first operation includes the detecting the second PDCCH (or transmitting the second PDCCH). In other words, if the second timer expires, the network device may transmit the second PDCCH to the terminal device, where a transmission resource occupied by a reference signal in the second PDCCH is not used for transmitting the another signal. In embodiments of this application, if the second timer expires, the network device may transmit a legacy second PDCCH to the terminal device, to ensure reception performance of a PDCCH.

In some implementations, the second resource element of the first type is a first kind of second resource element in the plurality of kinds of second resource elements of the first type, the plurality of kinds of second resource elements of the first type further include a second kind of second resource element, and the method further includes: in response to that the second timer expires, performing, by the terminal device, communication based on the second kind of second resource element. Correspondingly, in response to that the second timer expires, the network device performs communication based on the second kind of second resource element.

In embodiments of this application, the second kind of second resource element is not limited. For example, the second kind of second resource element may be a second resource element of the first type that includes the largest quantity of orthogonal RS REs in the plurality of kinds of second resource elements of the first type, which helps improve reliability of channel estimation.

As more and more types of terminal devices are introduced into a communications system, different terminal devices have different capabilities. If the network device transmits same configuration information to all terminal devices to configure the first resource element and/or the second resource element, a resource waste may occur. For example, for some terminal devices that fail to support the first resource element of the first type, the first configuration information transmitted by the network device to the terminal devices is useless, which wastes transmission resources for transmitting the first configuration information.

Therefore, in view of the foregoing problems, in embodiments of this application, it is proposed that the terminal device may transmit capability information to the network device, so that the network device transmits the configuration information based on the capability information.

In some implementations, the method further includes: transmitting, by the network device, first capability information to the terminal device, where the first capability information is associated with the first resource element of the first type.

In some implementations, the first capability information is used for indicating one or more of the following: whether the terminal device supports the first PDCCH; whether the terminal device supports the first resource element of the first type; whether the terminal device supports a model corresponding to the first resource element of the first type; whether the terminal device supports an AI feature corresponding to the first resource element of the first type; or whether the terminal device supports an AI function corresponding to the first resource element of the first type.

For example, the first capability information is used for indicating whether the terminal device supports the first PDCCH. The first capability information may include one bit, which indicates whether the terminal device supports the first PDCCH. This helps reduce transmission overheads. A value of the bit being a first value indicates that the terminal device supports the first PDCCH; a value of the bit being a second value indicates that the terminal device fails to support the first PDCCH. The first value is different from the second value. For example, the first value may be 1, and the second value may be 0. For another example, the first value may be 0, and the second value may be 1.

For example, the first capability information is used for indicating whether the terminal device supports the first resource element of the first type. The first capability information may include one bit, which indicates whether the terminal device supports the first resource element of the first type. This helps reduce transmission overheads. A value of the bit being a first value indicates that the terminal device supports the first resource element of the first type; a value of the bit being a second value indicates that the terminal device fails to support the first resource element of the first type. The first value is different from the second value. For example, the first value may be 1, and the second value may be 0. For another example, the first value may be 0, and the second value may be 1.

In some implementations, the first capability information may further include an identifier corresponding to the first resource element of the first type supported by the terminal device. In addition, in embodiments of this application, a quantity of first resource elements of the first type supported by the terminal device is not limited, and there may be one or more first resource elements of the first type indicated in the first capability information.

For example, the first capability information is used for indicating whether the terminal device supports the model corresponding to the first resource element of the first type. The first capability information may include one bit, which indicates whether the terminal device supports the model corresponding to the first resource element of the first type. This helps reduce transmission overheads. A value of the bit being a first value indicates that the terminal device supports the model corresponding to the first resource element of the first type; a value of the bit being a second value indicates that the terminal device fails to support the model corresponding to the first resource element of the first type. The first value is different from the second value. For example, the first value may be 1, and the second value may be 0. For another example, the first value may be 0, and the second value may be 1.

In some implementations, the first capability information may further include a model identifier of the model corresponding to the first resource element of the first type supported by the terminal device. In addition, in embodiments of this application, a quantity of models supported by the terminal device is not limited, and there may be one or more models indicated in the first capability information.

For example, the first capability information is used for indicating whether the terminal device supports the AI feature corresponding to the first resource element of the first type. The first capability information may include one bit, which indicates whether the terminal device supports the AI feature corresponding to the first resource element of the first type. This helps reduce transmission overheads. A value of the bit being a first value indicates that the terminal device supports the AI feature corresponding to the first resource element of the first type; a value of the bit being a second value indicates that the terminal device fails to support the AI feature corresponding to the first resource element of the first type. The first value is different from the second value. For example, the first value may be 1, and the second value may be 0. For another example, the first value may be 0, and the second value may be 1.

In some implementations, the first capability information may further include an AI feature identifier of the AI feature corresponding to the first resource element of the first type supported by the terminal device. In addition, in embodiments of this application, a quantity of AI features supported by the terminal device is not limited, and there may be one or more AI features indicated in the first capability information.

For example, the first capability information is used for indicating whether the terminal device supports the AI function corresponding to the first resource element of the first type. The first capability information may include one bit, which indicates whether the terminal device supports the AI function corresponding to the first resource element of the first type. This helps reduce transmission overheads. A value of the bit being a first value indicates that the terminal device supports the AI function corresponding to the first resource element of the first type; a value of the bit being a second value indicates that the terminal device fails to support the AI function corresponding to the first resource element of the first type. The first value is different from the second value. For example, the first value may be 1, and the second value may be 0. For another example, the first value may be 0, and the second value may be 1.

In some implementations, the first capability information may further include an AI function identifier of the AI function corresponding to the first resource element of the first type supported by the terminal device. In addition, in embodiments of this application, a quantity of AI functions supported by the terminal device is not limited, and there may be one or more AI functions indicated in the first capability information.

In some implementations, the method further includes: transmitting, by the network device, second capability information to the terminal device, where the second capability information is associated with the second resource element of the first type.

In some implementations, the second capability information is used for indicating one or more of the following: whether the terminal device supports the second resource element of the first type; whether the terminal device supports a model corresponding to the second resource element of the first type; whether the terminal device supports an AI feature corresponding to the second resource element of the first type; or whether the terminal device supports an AI function corresponding to the second resource element of the first type.

For example, the second capability information is used for indicating whether the terminal device supports the second resource element of the first type. The second capability information may include one bit, which indicates whether the terminal device supports the second resource element of the first type. This helps reduce transmission overheads. A value of the bit being a first value indicates that the terminal device supports the second resource element of the first type; a value of the bit being a second value indicates that the terminal device fails to support the second resource element of the first type. The first value is different from the second value. For example, the first value may be 1, and the second value may be 0. For another example, the first value may be 0, and the second value may be 1.

In some implementations, the second capability information may further include an identifier corresponding to the second resource element of the first type supported by the terminal device. In addition, in embodiments of this application, a quantity of second resource elements of the first type supported by the terminal device is not limited, and there may be one or more second resource elements of the first type indicated in the second capability information.

For example, the second capability information is used for indicating whether the terminal device supports the model corresponding to the second resource element of the first type. The second capability information may include one bit, which indicates whether the terminal device supports the model corresponding to the second resource element of the first type. This helps reduce transmission overheads. A value of the bit being a first value indicates that the terminal device supports the model corresponding to the second resource element of the first type; a value of the bit being a second value indicates that the terminal device fails to support the model corresponding to the second resource element of the first type. The first value is different from the second value. For example, the first value may be 1, and the second value may be 0. For another example, the first value may be 0, and the second value may be 1.

In some implementations, the second capability information may further include a model identifier of the model corresponding to the second resource element of the first type supported by the terminal device. In addition, in embodiments of this application, a quantity of models supported by the terminal device is not limited, and there may be one or more models indicated in the second capability information.

For example, the second capability information is used for indicating whether the terminal device supports the AI feature corresponding to the second resource element of the first type. The second capability information may include one bit, which indicates whether the terminal device supports the AI feature corresponding to the second resource element of the first type. This helps reduce transmission overheads. A value of the bit being a first value indicates that the terminal device supports the AI feature corresponding to the second resource element of the first type; a value of the bit being a second value indicates that the terminal device fails to support the AI feature corresponding to the second resource element of the first type. The first value is different from the second value. For example, the first value may be 1, and the second value may be 0. For another example, the first value may be 0, and the second value may be 1.

In some implementations, the second capability information may further include an AI feature identifier of the AI feature corresponding to the second resource element of the first type supported by the terminal device. In addition, in embodiments of this application, a quantity of AI features supported by the terminal device is not limited, and there may be one or more AI features indicated in the second capability information.

For example, the second capability information is used for indicating whether the terminal device supports the AI function corresponding to the second resource element of the first type. The second capability information may include one bit, which indicates whether the terminal device supports the AI function corresponding to the second resource element of the first type. This helps reduce transmission overheads. A value of the bit being a first value indicates that the terminal device supports the AI function corresponding to the second resource element of the first type; a value of the bit being a second value indicates that the terminal device fails to support the AI function corresponding to the second resource element of the first type. The first value is different from the second value. For example, the first value may be 1, and the second value may be 0. For another example, the first value may be 0, and the second value may be 1.

In some implementations, the second capability information may further include an AI function identifier of the AI function corresponding to the second resource element of the first type supported by the terminal device. In addition, in embodiments of this application, a quantity of AI functions supported by the terminal device is not limited, and there may be one or more AI functions indicated in the second capability information.

In embodiments of this application, the first capability information and the second capability information may be same information (or information transmitted simultaneously), or the first capability information and the second capability information may be different information (or information transmitted independently).

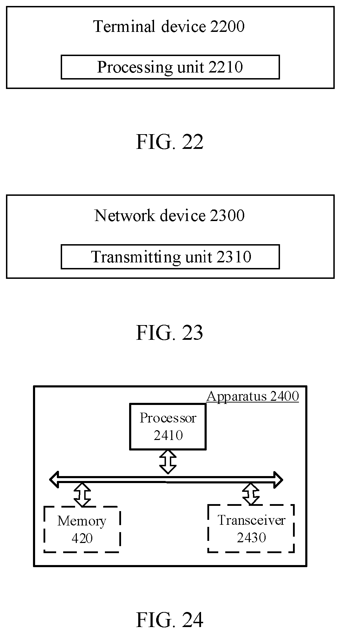

The method embodiments of this application are described above in detail with reference to FIG. 1 to FIG. 21. Apparatus embodiments of this application are described below in detail with reference to FIG. 22 to FIG. 24. It should be understood that the descriptions of the method embodiments correspond to descriptions of the apparatus embodiments, and therefore, for parts that are not described in detail, reference may be made to the foregoing method embodiments.

FIG. 22 is a schematic diagram of a terminal device according to an embodiment of this application. A terminal device 2200 shown in FIG. 22 includes a processing unit 2210.

The processing unit 2210 is configured to detect a first physical downlink control channel PDCCH, where the first PDCCH includes a first resource element of a first type, in the first resource element of the first type, part or all of transmission resources occupied by a reference signal are available for transmitting another signal, and the another signal is a signal other than the reference signal.

In some implementations, the first resource element of the first type includes a plurality of transmission resources, and the reference signal occupies the plurality of transmission resources. Part of transmission resources among the plurality of transmission resources are available for transmitting the another signal, other transmission resources among the plurality of transmission resources are not available for transmitting the another signal, and the other transmission resources are transmission resources, other than the part of transmission resources, among the plurality of transmission resources.

In some implementations, the terminal device further includes: a first receiving unit, configured to receive first configuration information transmitted by a network device, where the first configuration information is used for configuring the first resource element of the first type.

In some implementations, the first configuration information is used to indicate one or more of the following: model information corresponding to the first resource element of the first type; artificial intelligence AI function information corresponding to the first resource element of the first type; AI feature information corresponding to the first resource element of the first type; a transmission resource occupied by the reference signal in the first resource element of the first type; or whether a transmission resource occupied by the reference signal in the first resource element of the first type is available for transmitting the another signal.

In some implementations, the first configuration information is used to configure the first resource element of the first type for a first bandwidth part BWP.

In some implementations, the terminal device further includes that: in a case that the terminal device switches from a second BWP to the first BWP, the terminal device switches from configuration information corresponding to the second BWP to the first configuration information, where the configuration information corresponding to the second BWP is used for configuring the first resource element of the first type for the second BWP.

In some implementations, if the first configuration information is used to configure a plurality of types of first resource elements of the first type, the terminal device further includes: a second receiving unit, configured to receive first indication information transmitted by the network device, where the first indication information is used for instructing to activate one kind of first resource element from the plurality of kinds of first resource elements of the first type.

In some implementations, the processing unit is further configured to: start a first timer in response to activating or configuring the first resource element of the first type; and execute a first operation in response to that the first timer expires. The first operation includes one of the following: communicating based on a default first resource element, where the default first resource element is the first resource element of the first type; communicating based on a first resource element of a second type, where in the first resource element of the second type, a transmission resource occupied by a reference signal is not used for transmitting the another signal; communicating based on a second resource element of a second type, where in the second resource element of the second type, a transmission resource occupied by a reference signal is not used for transmitting the another signal; or detecting a second PDCCH, where in the second PDCCH, a transmission resource occupied by a reference signal is not used for transmitting the another signal.

In some implementations, the first resource element of the first type is a first kind of first resource element among a plurality of kinds of first resource elements of the first type, the plurality of kinds of first resource elements of the first type further include a second kind of first resource element. The processing unit is further configured to: start a first timer in response to activating or configuring the first resource element of the first type; and perform communication based on the second kind of first resource element in response to that the first timer expires.

In some implementations, the terminal device further includes: a first transmitting unit, configured to transmit first capability information to the network device, where the first capability information is used for indicating one or more of the following: whether the terminal device supports the first PDCCH; whether the terminal device supports the first resource element of the first type; whether the terminal device supports a model corresponding to the first resource element of the first type; whether the terminal device supports an AI feature corresponding to the first resource element of the first type; or whether the terminal device supports an AI function corresponding to the first resource element of the first type.

In some implementations, the first PDCCH includes the first resource element of a second type, and in the first resource element of the second type, a transmission resource occupied by a reference signal is not used for transmitting the another signal.

In some implementations, the first resource element is a control channel element CCE.

In some implementations, the first resource element of the first type belongs to a second resource element of the first type.

In some implementations, the second resource element of the first type includes a first resource element of a second type, and in the first resource element of the second type, a transmission resource occupied by a reference signal is not used for transmitting the another signal.

In some implementations, the second resource element is a CCE, and the first resource element is a resource element group REG.

In some implementations, the terminal device further includes: a third receiving unit, configured to receive second configuration information transmitted by the network device, where the second configuration information is used for configuring the second resource element of the first type.

In some implementations, the second configuration information is used to indicate one or more of the following: model information corresponding to the second resource element of the first type; AI function information corresponding to the second resource element of the first type; AI feature information corresponding to the second resource element of the first type; a transmission resource occupied by the reference signal in the second resource element of the first type; or whether a transmission resource occupied by the reference signal in the second resource element of the first type is available for transmitting the another signal.

In some implementations, the second configuration information is used to configure the second resource element of the first type for the first BWP.

In some implementations, the processing unit is further configured to: in a case that the terminal device switches from a second BWP to the first BWP, switch from configuration information corresponding to the second BWP to the second configuration information, where the configuration information corresponding to the second BWP is used for configuring the second resource element of the first type for the second BWP.

In some implementations, if the second configuration information is used to configure a plurality of types of second resource elements of the first type, the terminal device further includes: a fourth receiving unit, configured to receive second indication information transmitted by the network device, where the second indication information is used for instructing to activate one kind of second resource element from the plurality of kinds of second resource elements of the first type.

In some implementations, the processing unit is further configured to: start a second timer in response to activating or configuring the second resource element of the first type; and execute a first operation in response to that the second timer expires. The first operation includes one of the following: communicating based on a default second resource element, where the default second resource element is one of the second resource elements of the first type; communicating based on a first resource element of a second type, where in the first resource element of the second type, a transmission resource occupied by a reference signal is not used for transmitting the another signal; communicating based on a second resource element of a second type, where in the second resource element of the second type, a transmission resource occupied by a reference signal is not used for transmitting the another signal; or detecting a second PDCCH, where in the second PDCCH, a transmission resource occupied by a reference signal is not used for transmitting the another signal.

In some implementations, the second resource element of the first type is a first kind of second resource element among a plurality of kinds of second resource elements of the first type, the plurality of kinds of second resource elements of the first type further include a second kind of first resource element, and the processing unit is further configured to: start a second timer in response to activating or configuring the second resource element of the first type; and perform communication based on the second kind of second resource element in response to that the second timer expires.

In some implementations, the terminal device further includes: a second transmitting unit, configured to transmit second capability information to the network device, where the second capability information is used for indicating one or more of the following: whether the terminal device supports the second resource element of the first type; whether the terminal device supports a model corresponding to the second resource element of the first type; whether the terminal device supports an AI feature corresponding to the second resource element of the first type; or whether the terminal device supports an AI function corresponding to the second resource element of the first type.

FIG. 23 is a schematic diagram of a network device according to an embodiment of this application. A network device 2300 shown in FIG. 23 includes a transmitting unit 2310.

The transmitting unit 2310 is configured to transmit a first physical downlink control channel PDCCH to a terminal device, where the first PDCCH includes a first resource element of a first type, in the first resource element of the first type, part or all of transmission resources occupied by a reference signal are available for transmitting another signal, and the another signal is a signal other than the reference signal.

In some implementations, the first resource element of the first type includes a plurality of transmission resources, and the reference signal occupies the plurality of transmission resources. Part of transmission resources among the plurality of transmission resources are available for transmitting the another signal, other transmission resources among the plurality of transmission resources are not available for transmitting the another signal, and the other transmission resources are transmission resources, other than the part of transmission resources, among the plurality of transmission resources.

In some implementations, the transmitting unit is configured to: transmit first configuration information to the terminal device, where the first configuration information is used for configuring the first resource element of the first type.

In some implementations, the first configuration information is used to indicate one or more of the following: model information corresponding to the first resource element of the first type; artificial intelligence AI function information corresponding to the first resource element of the first type; AI feature information corresponding to the first resource element of the first type; a transmission resource occupied by the reference signal in the first resource element of the first type; or whether a transmission resource occupied by the reference signal in the first resource element of the first type is available for transmitting the another signal.

In some implementations, the first configuration information is used to configure the first resource element of the first type for a first bandwidth part BWP.

In some implementations, the network device further includes a first processing unit, and the first processing unit is configured to: in a case that the terminal device switches from a second BWP to the first BWP, switch from configuration information corresponding to the second BWP to the first configuration information, where the configuration information corresponding to the second BWP is used for configuring the first resource element of the first type for the second BWP.

In some implementations, if the first configuration information is used to configure a plurality of kinds of first resource elements of the first type, the transmitting unit is configured to transmit first indication information to the terminal device, where the first indication information is used for instructing to activate one kind of first resource element from the plurality of kinds of first resource elements of the first type.

In some implementations, the network device further includes a second processing unit, and the second processing unit is configured to start a first timer in response to activating or configuring the first resource element of the first type; and execute a first operation in response to that the first timer expires. The first operation includes one of the following: communicating based on a default first resource element, where the default first resource element is the first resource element of the first type; communicating based on a first resource element of a second type, where in the first resource element of the second type, a transmission resource occupied by a reference signal is not used for transmitting the another signal; communicating based on a second resource element of a second type, where in the second resource element of the second type, a transmission resource occupied by a reference signal is not used for transmitting the another signal; or detecting a second PDCCH, where in the second PDCCH, a transmission resource occupied by a reference signal is not used for transmitting the another signal.

In some implementations, the first resource element of the first type is a first kind of first resource element in a plurality of kinds of first resource elements of the first type, and the plurality of kinds of first resource elements of the first type further include a second kind of first resource element. The network device further includes a third processing unit, and the third processing unit is configured to: start a first timer in response to activating or configuring the first resource element of the first type; and perform communication based on the second kind of first resource element in response to that the first timer expires.

In some implementations, the network device further includes: a first receiving unit, configured to receive first capability information transmitted by the terminal device, where the first capability information is used for indicating one or more of the following: whether the terminal device supports the first PDCCH; whether the terminal device supports the first resource element of the first type; whether the terminal device supports a model corresponding to the first resource element of the first type; whether the terminal device supports an AI feature corresponding to the first resource element of the first type; or whether the terminal device supports an AI function corresponding to the first resource element of the first type.

In some implementations, the first PDCCH includes the first resource element of a second type, and in the first resource element of the second type, a transmission resource occupied by a reference signal is not used for transmitting the another signal.

In some implementations, the first resource element is a control channel element CCE.

In some implementations, the first resource element of the first type belongs to a second resource element of the first type.

In some implementations, the second resource element of the first type includes a first resource element of a second type, and in the first resource element of the second type, a transmission resource occupied by a reference signal is not used for transmitting the another signal.

In some implementations, the second resource element is a CCE, and the first resource element is a resource element group REG.

In some implementations, the transmitting unit is configured to: transmitting second configuration information to the terminal device, where the second configuration information is used for configuring the second resource element of the first type.

In some implementations, the second configuration information is used to indicate one or more of the following: model information corresponding to the second resource element of the first type; AI function information corresponding to the second resource element of the first type; AI feature information corresponding to the second resource element of the first type; a transmission resource occupied by the reference signal in the second resource element of the first type; or whether a transmission resource occupied by the reference signal in the second resource element of the first type is available for transmitting the another signal.

In some implementations, the second configuration information is used to configure the second resource element of the first type for the first BWP.

In some implementations, the network device further includes a fourth processing unit, and the fourth processing unit is configured to: in a case that the terminal device switches from a second BWP to the first BWP, switch from configuration information corresponding to the second BWP to the second configuration information, where the configuration information corresponding to the second BWP is used for configuring the second resource element of the first type for the second BWP.

In some implementations, if the second configuration information is used to configure a plurality of kinds of second resource elements of the first type, the transmitting unit is configured to transmit second indication information to the terminal device, where the second indication information is used for instructing to activate one kind of second resource element from the plurality of kinds of second resource elements of the first type.

In some implementations, the network device is further configured to: start a second timer in response to activating or configuring the second resource element of the first type; and execute a first operation in response to that the second timer expires. The first operation includes one of the following: communicating based on a default second resource element, where the default second resource element is a second resource element of the first type; communicating based on a first resource element of a second type, where in the first resource element of the second type, a transmission resource occupied by a reference signal is not used for transmitting the another signal; communicating based on a second resource element of a second type, where in the second resource element of the second type, a transmission resource occupied by a reference signal is not used for transmitting the another signal; or detecting a second PDCCH, where in the second PDCCH, a transmission resource occupied by a reference signal is not used for transmitting the another signal.

In some implementations, the second resource element of the first type is a first kind of second resource element among a plurality of kinds of second resource elements of the first type, the plurality of kinds of second resource elements of the first type further include a second kind of first resource element. The network device further includes a fifth processing unit, and the fifth processing unit is configured to: start a second timer in response to activating or configuring the second resource element of the first type; and perform communication based on the second kind of second resource element in response to that the second timer expires.

In some implementations, the network device further includes: a second receiving unit, configured to receive second capability information transmitted by the terminal device. The second capability information is used for indicating one or more of the following: whether the terminal device supports the second resource element of the first type; whether the terminal device supports a model corresponding to the second resource element of the first type; whether the terminal device supports an AI feature corresponding to the second resource element of the first type; or whether the terminal device supports an AI function corresponding to the second resource element of the first type.

In an optional embodiment, the processing unit 2210 may be a processor 2410. The terminal device 2200 may further include a transceiver 2230 and a memory 2220, which are specifically shown in FIG. 24.

In an optional embodiment, the transmitting unit 2310 may be a transceiver 2430. The network device 2300 may further include a processor 2410 and a memory 2420, which are specifically shown in FIG. 24.

FIG. 24 is a schematic diagram of a structure of a communications apparatus according to an embodiment of this application. Dashed lines in FIG. 24 indicate that a unit or module is optional. The apparatus 2400 may be configured to implement the methods described in the foregoing method embodiments. The apparatus 2400 may be a chip, a terminal device, or a network device.

The apparatus 2400 may include one or more processors 2410. The processor 2410 may support the apparatus 2400 in implementing the methods described in the foregoing method embodiments. The processor 2410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2400 may further include one or more memories 2420. The memory 2420 stores a program, where the program may be executed by the processor 2410, to cause the processor 2410 to execute the methods described in the method embodiments. The memory 2420 may be separated from or integrated into the processor 2410.

The apparatus 2400 may further include a transceiver 2430. The processor 2410 may communicate with another device or chip by using the transceiver 2430. For example, the processor 2410 may transmit data to and receive data from another device or chip through the transceiver 2430.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD), a semiconductor medium (for example, a solid-state drive (solid state disk, SSD), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transmitting a physical downlink control channel, comprising:
detecting, by a terminal device, a first physical downlink control channel PDCCH, wherein the first PDCCH is carried on a first resource element of a first type, in the first resource element of the first type, part or all of transmission resources occupied by a reference signal are available for transmitting another signal, and the another signal is a signal other than the reference signal.

2. The method according to claim 1, wherein the first resource element of the first type comprises a plurality of transmission resources, the reference signal occupies the plurality of transmission resources, part of transmission resources among the plurality of transmission resources are available for transmitting the another signal, other transmission resources among the plurality of transmission resources are not available for transmitting the another signal, and the other transmission resources are transmission resources, other than the part of transmission resources, among the plurality of transmission resources.

3. The method according to claim 1 or 2, wherein the method further comprises:
receiving, by the terminal device, first configuration information transmitted by a network device, wherein the first configuration information is used for configuring the first resource element of the first type.

4. The method according to claim 3, wherein the first configuration information is used for indicating one or more of following:
model information corresponding to the first resource element of the first type;
artificial intelligence AI function information corresponding to the first resource element of the first type;
AI feature information corresponding to the first resource element of the first type;
a transmission resource occupied by the reference signal in the first resource element of the first type; or
whether a transmission resource occupied by the reference signal in the first resource element of the first type is available for transmitting the another signal.

5. The method according to claim 3 or 4, wherein the first configuration information is used for configuring the first resource element of the first type for a first bandwidth part BWP.

6. The method according to any one of claims 3 to 5, wherein the method further comprises:
in a case that the terminal device switches from a second BWP to the first BWP, switching, by the terminal device, from configuration information corresponding to the second BWP to the first configuration information, wherein the configuration information corresponding to the second BWP is used for configuring the first resource element of the first type for the second BWP.

7. The method according to any one of claims 3 to 6, wherein in a case that the first configuration information is used for configuring a plurality of kinds of first resource elements of the first type, the method further comprises:
receiving, by the terminal device, first indication information transmitted by the network device, wherein the first indication information is used for instructing to activate one kind of first resource element from the plurality of kinds of first resource elements of the first type.

8. The method according to any one of claims 1 to 7, wherein the method further comprises:
in response to activating or configuring the first resource element of the first type, starting, by the terminal device, a first timer; and
in response to that the first timer expires, executing, by the terminal device, a first operation,
wherein the first operation comprises one of following:
communicating based on a default first resource element, wherein the default first resource element is the first resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

9. The method according to any one of claims 1 to 7, wherein the first resource element of the first type is a first kind of first resource element among a plurality of kinds of first resource elements of the first type, the plurality of kinds of first resource elements of the first type further comprise a second kind of first resource element, and the method further comprises:
in response to activating or configuring the first resource element of the first type, starting, by the terminal device, a first timer; and
in response to that the first timer expires, performing, by the terminal device, communication based on the second kind of first resource element.

10. The method according to any one of claims 1 to 9, wherein the method further comprises:
transmitting, by the terminal device, first capability information to a network device, wherein the first capability information is used for indicating one or more of following:
whether the terminal device supports the first PDCCH;
whether the terminal device supports the first resource element of the first type;
whether the terminal device supports a model corresponding to the first resource element of the first type;
whether the terminal device supports an AI feature corresponding to the first resource element of the first type; or
whether the terminal device supports an AI function corresponding to the first resource element of the first type.

11. The method according to any one of claims 1 to 10, wherein the first PDCCH is further carried on the first resource element of a second type, and in the first resource element of the second type, a transmission resource occupied by a reference signal is not used for transmitting the another signal.

12. The method according to any one of claims 1 to 11, wherein the first resource element is a control channel element CCE.

13. The method according to any one of claims 1 to 10, wherein the first resource element of the first type belongs to a second resource element of a first type.

14. The method according to claim 13, wherein the second resource element of the first type comprises a first resource element of a second type, and in the first resource element of the second type, a transmission resource occupied by a reference signal is not used for transmitting the another signal.

15. The method according to claim 13 or 14, wherein the second resource element is a CCE, and the first resource element is a resource element group REG.

16. The method according to any one of claims 13 to 15, wherein the method further comprises:
receiving, by the terminal device, second configuration information transmitted by a network device, wherein the second configuration information is used for configuring the second resource element of the first type.

17. The method according to claim 16, wherein the second configuration information is used for indicating one or more of following:
model information corresponding to the second resource element of the first type;
AI function information corresponding to the second resource element of the first type;
AI feature information corresponding to the second resource element of the first type;
a transmission resource occupied by the reference signal in the second resource element of the first type; or
whether a transmission resource occupied by the reference signal in the second resource element of the first type is available for transmitting the another signal.

18. The method according to claim 16 or 17, wherein the second configuration information is used for configuring the second resource element of the first type for a first bandwidth part BWP.

19. The method according to claim 18, wherein the method further comprises:
in a case that the terminal device switches from a second BWP to the first BWP, switching, by the terminal device from configuration information corresponding to the second BWP to the second configuration information, wherein the configuration information corresponding to the second BWP is used for configuring the second resource element of the first type for the second BWP.

20. The method according to any one of claims 16 to 19, wherein in a case that the second configuration information is used for configuring a plurality of kinds of second resource elements of the first type, the method further comprises:
receiving, by the terminal device, second indication information transmitted by the network device, wherein the second indication information is used for instructing to activate one kind of second resource element from the plurality of kinds of second resource elements of the first type.

21. The method according to any one of claims 13 to 20, wherein the method further comprises:
in response to activating or configuring the second resource element of the first type, starting, by the terminal device, a second timer; and
in response to that the second timer expires, executing, by the terminal device, a first operation,
wherein the first operation comprises one of following:
communicating based on a default second resource element, wherein the default second resource element is one the second resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

22. The method according to any one of claims 13 to 20, wherein the second resource element of the first type is a first kind of second resource element among a plurality of kinds of second resource elements of the first type, the plurality of kinds of second resource elements of the first type further comprise a second kind of first resource element, and the method further comprises:
in response to activating or configuring the second resource element of the first type, starting, by the terminal device, a second timer; and
in response to that the second timer expires, performing, by the terminal device, communication based on the second kind of second resource element.

23. The method according to any one of claims 13 to 22, wherein the method further comprises:
transmitting, by the terminal device, second capability information to a network device, wherein the second capability information is used for indicating one or more of following:
whether the terminal device supports the second resource element of the first type;
whether the terminal device supports a model corresponding to the second resource element of the first type;
whether the terminal device supports an AI feature corresponding to the second resource element of the first type; or
whether the terminal device supports an AI function corresponding to the second resource element of the first type.

24. A method for transmitting a physical downlink control channel, comprising:
transmitting, by a network device, a first physical downlink control channel PDCCH to a terminal device, wherein the first PDCCH is carried on a first resource element of a first type, in the first resource element of the first type, part or all of transmission resources occupied by a reference signal are available for transmitting another signal, and the another signal is a signal other than the reference signal.

25. The method according to claim 24, wherein the first resource element of the first type comprises a plurality of transmission resources, the reference signal occupies the plurality of transmission resources, part of transmission resources among the plurality of transmission resources are available for transmitting the another signal, other transmission resources among the plurality of transmission resources are not available for transmitting the another signal, and the other transmission resources are transmission resources, other than the part of transmission resources, among the plurality of transmission resources.

26. The method according to claim 24 or 25, wherein the method further comprises:
transmitting, by the network device, first configuration information to the terminal device, wherein the first configuration information is used for configuring the first resource element of the first type.

27. The method according to claim 26, wherein the first configuration information is used for indicating one or more of following:
model information corresponding to the first resource element of the first type;
artificial intelligence AI function information corresponding to the first resource element of the first type;
AI feature information corresponding to the first resource element of the first type;
a transmission resource occupied by the reference signal in the first resource element of the first type; or
whether a transmission resource occupied by the reference signal in the first resource element of the first type is available for transmitting the another signal.

28. The method according to claim 26 or 27, wherein the first configuration information is used for configuring the first resource element of the first type for a first bandwidth part BWP.

29. The method according to any one of claims 26 to 28, wherein the method further comprises:
in a case that the terminal device switches from a second BWP to the first BWP, switching, by the network device, from configuration information corresponding to the second BWP to the first configuration information, wherein the configuration information corresponding to the second BWP is used for configuring the first resource element of the first type for the second BWP.

30. The method according to any one of claims 26 to 29, wherein in a case that the first configuration information is used for configuring a plurality of kinds of first resource elements of the first type, the method further comprises:
transmitting, by the network device, first indication information to the terminal device, wherein the first indication information is used for instructing to activate one kind of first resource element from the plurality of kinds of first resource elements of the first type.

31. The method according to any one of claims 24 to 30, wherein the method further comprises:
in response to activating or configuring the first resource element of the first type, starting, by the network device, a first timer; and
in response to that the first timer expires, executing, by the network device, a first operation,
wherein the first operation comprises one of following:
communicating based on a default first resource element, wherein the default first resource element is the first resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

32. The method according to any one of claims 24 to 30, wherein the first resource element of the first type is a first kind of first resource element among a plurality of kinds of first resource elements of the first type, the plurality of kinds of first resource elements of the first type further comprise a second kind of first resource element, and the method further comprises:
in response to activating or configuring the first resource element of the first type, starting, by the network device, a first timer; and
in response to that the first timer expires, performing, by the network device, communication based on the second kind of first resource element.

33. The method according to any one of claims 24 to 32, wherein the method further comprises:
receiving, by the network device, first capability information transmitted by the terminal device, wherein the first capability information is used for indicating one or more of following:
whether the terminal device supports the first PDCCH;
whether the terminal device supports the first resource element of the first type;
whether the terminal device supports a model corresponding to the first resource element of the first type;
whether the terminal device supports an AI feature corresponding to the first resource element of the first type; or
whether the terminal device supports an AI function corresponding to the first resource element of the first type.

34. The method according to any one of claims 24 to 33, wherein the first PDCCH is further carried on the first resource element of a second type, and in the first resource element of the second type, a transmission resource occupied by a reference signal is not used for transmitting the another signal.

35. The method according to any one of claims 24 to 34, wherein the first resource element is a control channel element CCE.

36. The method according to any one of claims 24 to 34, wherein the first resource element of the first type belongs to a second resource element of a first type.

37. The method according to claim 36, wherein the second resource element of the first type comprises a first resource element of a second type, and in the first resource element of the second type, a transmission resource occupied by a reference signal is not used for transmitting the another signal.

38. The method according to claim 36 or 37, wherein the second resource element is a CCE, and the first resource element is a resource element group REG.

39. The method according to any one of claims 36 to 38, wherein the method further comprises:
transmitting, by the network device, second configuration information to the terminal device, wherein the second configuration information is used for configuring the second resource element of the first type.

40. The method according to claim 39, wherein the second configuration information is used for indicating one or more of following:
model information corresponding to the second resource element of the first type;
AI function information corresponding to the second resource element of the first type;
AI feature information corresponding to the second resource element of the first type;
a transmission resource occupied by the reference signal in the second resource element of the first type; or
whether a transmission resource occupied by the reference signal in the second resource element of the first type is available for transmitting the another signal.

41. The method according to claim 39 or 40, wherein the second configuration information is used for configuring the second resource element of the first type for a first BWP.

42. The method according to claim 41, wherein the method further comprises:
in a case that the terminal device switches from a second BWP to the first BWP, switching, by the network device from configuration information corresponding to the second BWP to the second configuration information, wherein the configuration information corresponding to the second BWP is used for configuring the second resource element of the first type for the second BWP.

43. The method according to any one of claims 39 to 42, wherein in a case that the second configuration information is used for configuring a plurality of kinds of second resource elements of the first type, the method further comprises:
transmitting, by the network device, second indication information to the terminal device, wherein the second indication information is used for instructing to activate one kind of second resource element from the plurality of kinds of second resource elements of the first type.

44. The method according to any one of claims 36 to 43, wherein the method further comprises:
in response to activating or configuring the second resource element of the first type, starting, by the network device, a second timer; and
in response to that the second timer expires, executing, by the network device, a first operation,
wherein the first operation comprises one of following:
communicating based on a default second resource element, wherein the default second resource element is the second resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

45. The method according to any one of claims 36 to 43, wherein the second resource element of the first type is a first kind of second resource element among a plurality of kinds of second resource elements of the first type, the plurality of kinds of second resource elements of the first type further comprise a second kind of first resource element, and the method further comprises:
in response to activating or configuring the second resource element of the first type, starting, by the network device, a second timer; and
in response to that the second timer expires, performing, by the network device, communication based on the second kind of second resource element.

46. The method according to any one of claims 36 to 45, wherein the method further comprises:
receiving, by the network device, second capability information transmitted by the terminal device, wherein the second capability information is used for indicating one or more of following:
whether the terminal device supports the second resource element of the first type;
whether the terminal device supports a model corresponding to the second resource element of the first type;
whether the terminal device supports an AI feature corresponding to the second resource element of the first type; or
whether the terminal device supports an AI function corresponding to the second resource element of the first type.

47. A terminal device, comprising:
a processing unit, configured to detect a first physical downlink control channel PDCCH, wherein the first PDCCH is carried on a first resource element of a first type, in the first resource element of the first type, part or all of transmission resources occupied by a reference signal are available for transmitting another signal, and the another signal is a signal other than the reference signal.

48. The terminal device according to claim 47, wherein the first resource element of the first type comprises a plurality of transmission resources, the reference signal occupies the plurality of transmission resources, part of transmission resources among the plurality of transmission resources are available for transmitting the another signal, other transmission resources among the plurality of transmission resources are not available for transmitting the another signal, and the other transmission resources are transmission resources, other than the part of transmission resources, among the plurality of transmission resources.

49. The terminal device according to claim 47 or 48, wherein the terminal device further comprises:
a first receiving unit, configured to receive first configuration information transmitted by a network device, wherein the first configuration information is used for configuring the first resource element of the first type.

50. The terminal device according to claim 49, wherein the first configuration information is used for indicating one or more of following:
model information corresponding to the first resource element of the first type;
artificial intelligence AI function information corresponding to the first resource element of the first type;
AI feature information corresponding to the first resource element of the first type;
a transmission resource occupied by the reference signal in the first resource element of the first type; or
whether a transmission resource occupied by the reference signal in the first resource element of the first type is available for transmitting the another signal.

51. The terminal device according to claim 49 or 50, wherein the first configuration information is used for configuring the first resource element of the first type for a first bandwidth part BWP.

52. The terminal device according to any one of claims 49 to 51, wherein the terminal device further comprises:
in a case that the terminal device switches from a second BWP to the first BWP, switching, by the terminal device, from configuration information corresponding to the second BWP to the first configuration information, wherein the configuration information corresponding to the second BWP is used for configuring the first resource element of the first type for the second BWP.

53. The terminal device according to any one of claims 49 to 52, wherein in a case that the first configuration information is used for configuring a plurality of kinds of the first resource elements of the first type, the terminal device further comprises:
a second receiving unit, configured to receive first indication information transmitted by the network device, wherein the first indication information is used for instructing to activate one kind of first resource element from the plurality of kinds of first resource elements of the first type.

54. The terminal device according to any one of claims 47 to 53, wherein the processing unit is further configured to:
start a first timer in response to activating or configuring the first resource element of the first type; and
execute a first operation in response to that the first timer expires, wherein the first operation comprises one of following:
communicating based on a default first resource element, wherein the default first resource element is the first resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

55. The terminal device according to any one of claims 47 to 53, wherein the first resource element of the first type is a first kind of first resource element among a plurality of kinds of first resource elements of the first type, the plurality of kinds of first resource elements of the first type further comprise a second kind of first resource element, and the processing unit is further configured to:
start a first timer in response to activating or configuring the first resource element of the first type; and
perform communication based on the second kind of first resource element in response to that the first timer expires.

56. The terminal device according to any one of claims 47 to 55, wherein the terminal device further comprises:
a first transmitting unit, configured to transmit first capability information to a network device, wherein the first capability information is used for indicating one or more of following:
whether the terminal device supports the first PDCCH;
whether the terminal device supports the first resource element of the first type;
whether the terminal device supports a model corresponding to the first resource element of the first type;
whether the terminal device supports an AI feature corresponding to the first resource element of the first type; or
whether the terminal device supports an AI function corresponding to the first resource element of the first type.

57. The terminal device according to any one of claims 47 to 56, wherein the first PDCCH is further carried on the first resource element of a second type, and in the first resource element of the second type, a transmission resource occupied by a reference signal is not used for transmitting the another signal.

58. The terminal device according to any one of claims 47 to 57, wherein the first resource element is a control channel element CCE.

59. The terminal device according to any one of claims 47 to 56, wherein the first resource element of the first type belongs to a second resource element of a first type.

60. The terminal device according to claim 59, wherein the second resource element of the first type comprises a first resource element of a second type, and in the first resource element of the second type, a transmission resource occupied by a reference signal is not used for transmitting the another signal.

61. The terminal device according to claim 59 or 60, wherein the second resource element is a CCE, and the first resource element is a resource element group REG.

62. The terminal device according to any one of claims 59 to 61, wherein the terminal device further comprises:
a third receiving unit, configured to receive second configuration information transmitted by a network device, wherein the second configuration information is used for configuring the second resource element of the first type.

63. The terminal device according to claim 62, wherein the second configuration information is used for indicating one or more of following:
model information corresponding to the second resource element of the first type;
AI function information corresponding to the second resource element of the first type;
AI feature information corresponding to the second resource element of the first type;
a transmission resource occupied by the reference signal in the second resource element of the first type; or
whether a transmission resource occupied by the reference signal in the second resource element of the first type is available for transmitting the another signal.

64. The terminal device according to claim 62 or 63, wherein the second configuration information is used for configuring the second resource element of the first type for a first BWP.

65. The terminal device according to claim 64, wherein the processing unit is further configured to:
in a case that the terminal device switches from a second BWP to the first BWP, switch from configuration information corresponding to the second BWP to the second configuration information, wherein the configuration information corresponding to the second BWP is used for configuring the second resource element of the first type for the second BWP.

66. The terminal device according to any one of claims 62 to 65, wherein in a case that the second configuration information is used for configuring a plurality of kinds of the second resource elements of the first type, the terminal device further comprises:
a fourth receiving unit, configured to receive second indication information transmitted by the network device, wherein the second indication information is used for instructing to activate one kind of second resource element from the plurality of kinds of second resource elements of the first type.

67. The terminal device according to any one of claims 59 to 66, wherein the processing unit is further configured to:
start a second timer in response to activating or configuring the second resource element of the first type; and
execute a first operation in response to that the second timer expires, wherein the first operation comprises one of following:
communicating based on a default second resource element, wherein the default second resource element is one the second resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

68. The terminal device according to any one of claims 59 to 66, wherein the second resource element of the first type is a first kind of second resource element among a plurality of kinds of second resource elements of the first type, the plurality of kinds of second resource elements of the first type further comprise a second kind of first resource element, and the processing unit is further configured to:
start a second timer in response to activating or configuring the second resource element of the first type; and
perform communication based on the second kind of second resource element in response to that the second timer expires.

69. The terminal device according to any one of claims 59 to 68, wherein the terminal device further comprises:
a second transmitting unit, configured to transmit second capability information to a network device, wherein the second capability information is used for indicating one or more of following:
whether the terminal device supports the second resource element of the first type;
whether the terminal device supports a model corresponding to the second resource element of the first type;
whether the terminal device supports an AI feature corresponding to the second resource element of the first type; or
whether the terminal device supports an AI function corresponding to the second resource element of the first type.

70. A network device, comprising:
a transmitting unit, configured to transmit a first physical downlink control channel PDCCH to a terminal device, wherein the first PDCCH is carried on a first resource element of a first type, in the first resource element of the first type, part or all of transmission resources occupied by a reference signal are available for transmitting another signal, and the another signal is a signal other than the reference signal.

71. The network device according to claim 70, wherein the first resource element of the first type comprises a plurality of transmission resources, the reference signal occupies the plurality of transmission resources, part of transmission resources among the plurality of transmission resources are available for transmitting the another signal, other transmission resources among the plurality of transmission resources are not available for transmitting the another signal, and the other transmission resources are transmission resources, other than the part of transmission resources, among the plurality of transmission resources.

72. The network device according to claim 70 or 71, wherein the transmitting unit is configured to:
transmit first configuration information to the terminal device, wherein the first configuration information is used for configuring the first resource element of the first type.

73. The network device according to claim 72, wherein the first configuration information is used for indicating one or more of following:
model information corresponding to the first resource element of the first type;
artificial intelligence AI function information corresponding to the first resource element of the first type;
AI feature information corresponding to the first resource element of the first type;
a transmission resource occupied by the reference signal in the first resource element of the first type; or
whether a transmission resource occupied by the reference signal in the first resource element of the first type is available for transmitting the another signal.

74. The network device according to claim 72 or 73, wherein the first configuration information is used for configuring the first resource element of the first type for a first bandwidth part BWP.

75. The network device according to any one of claims 72 to 74, wherein the network device further comprises a first processing unit, and the first processing unit is configured to:
in a case that the terminal device switches from a second BWP to the first BWP, switch from configuration information corresponding to the second BWP to the first configuration information, wherein the configuration information corresponding to the second BWP is used for configuring the first resource element of the first type for the second BWP.

76. The network device according to any one of claims 72 to 75, wherein in a case that the first configuration information is used for configuring a plurality of kinds of first resource elements of the first type, the transmitting unit is configured to:
transmit first indication information to the terminal device, wherein the first indication information is used for instructing to activate one kind of first resource element from the plurality of kinds of first resource elements of the first type.

77. The network device according to any one of claims 70 to 76, wherein the network device further comprises a second processing unit, and the second processing unit is configured to:
start a first timer in response to activating or configuring the first resource element of the first type; and
execute a first operation in response to that the first timer expires, wherein the first operation comprises one of following:
communicating based on a default first resource element, wherein the default first resource element is the first resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

78. The network device according to any one of claims 70 to 76, wherein the first resource element of the first type is a first kind of first resource element among a plurality of kinds of first resource elements of the first type, the plurality of kinds of first resource elements of the first type further comprise a second kind of first resource element, the network device further comprises a third processing unit, and the third processing unit is configured to:
start a first timer in response to activating or configuring the first resource element of the first type; and
perform communication based on the second kind of first resource element in response to that the first timer expires.

79. The network device according to any one of claims 70 to 78, wherein the network device further comprises:
a first receiving unit, configured to receive first capability information transmitted by the terminal device, wherein the first capability information is used for indicating one or more of following:
whether the terminal device supports the first PDCCH;
whether the terminal device supports the first resource element of the first type;
whether the terminal device supports a model corresponding to the first resource element of the first type;
whether the terminal device supports an AI feature corresponding to the first resource element of the first type; or
whether the terminal device supports an AI function corresponding to the first resource element of the first type.

80. The network device according to any one of claims 70 to 79, wherein the first PDCCH is further carried on the first resource element of a second type, and in the first resource element of the second type, a transmission resource occupied by a reference signal is not used for transmitting the another signal.

81. The network device according to any one of claims 70 to 80, wherein the first resource element is a control channel element CCE.

82. The network device according to any one of claims 70 to 80, wherein the first resource element of the first type belongs to a second resource element of a first type.

83. The network device according to claim 82, wherein the second resource element of the first type comprises a first resource element of a second type, and in the first resource element of the second type, a transmission resource occupied by a reference signal is not used for transmitting the another signal.

84. The network device according to claim 82 or 83, wherein the second resource element is a CCE, and the first resource element is a resource element group REG.

85. The network device according to any one of claims 82 to 84, wherein the transmitting unit is configured to:
transmit second configuration information to the terminal device, wherein the second configuration information is used for configuring the second resource element of the first type.

86. The network device according to claim 85, wherein the second configuration information is used for indicating one or more of following:
model information corresponding to the second resource element of the first type;
AI function information corresponding to the second resource element of the first type;
AI feature information corresponding to the second resource element of the first type;
a transmission resource occupied by the reference signal in the second resource element of the first type; or
whether a transmission resource occupied by the reference signal in the second resource element of the first type is available for transmitting the another signal.

87. The network device according to claim 85 or 86, wherein the second configuration information is used for configuring the second resource element of the first type for a first BWP.

88. The network device according to claim 87, wherein the network device further comprises a fourth processing unit, and the fourth processing unit is configured to:
in a case that the terminal device switches from a second BWP to the first BWP, switch from configuration information corresponding to the second BWP to the second configuration information, wherein the configuration information corresponding to the second BWP is used for configuring the second resource element of the first type for the second BWP.

89. The network device according to any one of claims 85 to 88, wherein in a case that the second configuration information is used for configuring a plurality of kinds of the second resource elements of the first type,
the transmitting unit is configured to transmit second indication information to the terminal device, and the second indication information is used for instructing to activate one kind of second resource element from the plurality of kinds of second resource elements of the first type.

90. The network device according to any one of claims 82 to 89, wherein the network device further comprises:
start a second timer in response to activating or configuring the second resource element of the first type; and
execute a first operation in response to that the second timer expires,
wherein the first operation comprises one of following:
communicating based on a default second resource element, wherein the default second resource element is the second resource element of the first type;
communicating based on a first resource element of a second type, wherein in the first resource element of the second type, a transmission resource occupied by a reference signal is not used for transmitting the another signal;
communicating based on a second resource element of a second type, wherein in the second resource element of the second type, a transmission resource occupied by a reference signal is not used for transmitting the another signal; or
detecting a second PDCCH, wherein in the second PDCCH, a transmission resource occupied by a reference signal is not used for transmitting the another signal.

91. The network device according to any one of claims 82 to 89, wherein the second resource element of the first type is a first kind of second resource element among a plurality of kinds of second resource elements of the first type, the plurality of kinds of second resource elements of the first type further comprise a second kind of first resource element, the network device further comprises a fifth processing unit, and the fifth processing unit is configured to:
start a second timer in response to activating or configuring the second resource element of the first type; and
perform communication based on the second kind of second resource element in response to that the second timer expires.

92. The network device according to any one of claims 82 to 91, wherein the network device further comprises:
a second receiving unit, configured to receive second capability information transmitted by the terminal device, wherein the second capability information is used for indicating one or more of following:
whether the terminal device supports the second resource element of the first type;
whether the terminal device supports a model corresponding to the second resource element of the first type;
whether the terminal device supports an AI feature corresponding to the second resource element of the first type; or
whether the terminal device supports an AI function corresponding to the second resource element of the first type.

93. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 23.

94. A network device, comprising a transceiver, a memory, and a processor, wherein the memory is configured to store a program, and the processor is configured to invoke the program in the memory and control the transceiver to transmit or receive a signal, to cause the network device to execute the method according to any one of claims 24 to 46.

95. An apparatus, comprising a processor configured to invoke a program from a memory, to cause the apparatus to execute the method according to any one of claims 1 to 46.

96. A chip, comprising a processor, configured to invoke a program from a memory to cause a device installed with the chip to execute the method according to any one of claims 1 to 46.

97. A computer-readable storage medium, wherein the computer-readable storage medium stores a program, and the program causes a computer to execute the method according to any one of claims 1 to 46.

98. A computer program product, comprising a program that causes a computer to execute the method according to any one of claims 1 to 46.

99. A computer program, wherein the computer program causes a computer to execute the method according to any one of claims 1 to 46.
